# EUROPEAN PATENT APPLICATION

(11) **EP 4 691 768 A1**
(43) Date of publication of application: **11.02.2026**
(21) Application number: 24780817.3
(22) Date of filing: 29.03.2024
(51) Int. Cl.: B32B 27/00, B32B 27/30, C09D 5/16, C09D 163/00, C09D 183/04, C09D 201/02, C09D 201/06, C09J 7/29, C09J 7/38

(54) **LAMINATED ANTIFOULING COATING FILM**

(30) Priority: 31.03.2023 JP 2023058319
(71) Applicant: Chugoku Marine Paints, Ltd., Hiroshima 739-0652 (JP)
(72) Inventor: TANINO, Soichiro, Otake-shi, Hiroshima 739-0652 (JP); AE, Kazuki, Otake-shi, Hiroshima 739-0652 (JP); NAKAMURA, Shuya, Otake-shi, Hiroshima 739-0652 (JP)
(74) Representative: Hoffmann Eitle
(86) International application number: PCT/JP2024/013061
(87) International publication number: WO 2024/204722

(57) **Abstract**

The present invention provides, e.g., a laminated antifouling coating film which produces no problems such as peel-off when an antifouling coating film using a hydrolyzable copolymer is repaired and which provides easy repairment for regaining smoothness of the coating film, and provides a method for producing the laminated antifouling coating film. The laminated antifouling coating film of the present invention has an antifouling coating film (af) and a pressure-sensitive adhesive layer (pa). The antifouling coating film (af) contains a hydrolyzable copolymer (A) having a constitutional unit derived from a hydrolyzable group-containing monomer (a1).

## Description

### Technical Field

The present invention relates to a laminated antifouling coating film and a method for producing the film, and a water-contact structure provided with the laminated antifouling coating film.

### Background Art

The surface of a structure in contact with water, such as a ship, fishing equipment, and a water pipe, in short, a water-contact structure, is exposed to a risk, such as deterioration of appearance caused by, e.g., adhesion of aquatic organisms (in particular, under the sea) and an economic loss caused by an increase of waterflow resistance. Conventionally, for preventing such adhesion of aquatic organisms, a method of applying a coating composition having an antifouling function to prevent adhesion of aquatic organisms to the surface of the water-contact structure, thereby covering the surface with an antifouling coating film having an antifouling function has been used. Such an antifouling coating composition, a composition containing a hydrolyzable copolymer has been known, as disclosed, for example, in Patent Literature 1.

Alternatively, a method of attaching a sheet-like member having an antifouling coating film formed thereon in advance to a surface of a substrate, thereby covering the substrate with the antifouling coating film is also known.

For example, Cited Document 2 discloses an antifouling sheet in which an antifouling layer and a metal layer serving as, e.g., an outer plate layer, are integrally formed. Cited Document 2 also discloses that such an antifouling sheet is attached with bolts or rivets or by welding to cover, e.g., a ship, with an antifouling layer.

Cited Document 3 discloses an underwater antifouling multilayer, which is formed by providing an adhesive layer on one of the surfaces of a polymer sheet or tape and providing an underwater antifouling layer on the other surface, and that the underwater antifouling layer is a polyethylene resin composition containing a predetermined metal powder and polyethylene (if necessary, further containing a predetermined ethylene polymer). Cited Document 3 also discloses that an adhesive layer of such an underwater antifouling multilayer (after removing the attached release paper, if necessary) is bonded to various types of structures or ships requiring antifouling to cover them with the underwater antifouling layer, and discloses that the adhesive layer is composed of, for example, a rubber-based or synthetic resin-based pressure-sensitive adhesive, an activatable adhesive, or a hot-melt adhesive.

Cited Document 4 discloses an antifouling tape containing an antifouling layer, a support layer, and an adhesive layer in this order, and an antifouling method including a step of bonding such an antifouling tape to a surface of an antifouling protection target. Cited Document 4 also discloses that the adhesive layer may contain, e.g., a thermosetting adhesive, and a pressure applied adhesive.

### Citation List

### Patent Literature

Patent Literature 1: WO 2018/087846 A
Patent Literature 2: JP S58-4692
Patent Literature 3: JP S63-21144
Patent Literature 3: JP 2006-526528 A

### Summary of Invention

### Technical Problem

The antifouling coating film formed of a hydrolyzable copolymer as disclosed in Cited Document 1 requires periodical repairment such as topcoat painting. However, there are problems depending on the components of the antifouling coating film or the conditions where the coating film is placed, more specifically, the overcoatability of the surface of the film deteriorates and the top-coating film sometimes peels off. In addition to the above problems, when the coating film peels off or is scratched, smoothness thereof decreases; in particular, in the case where the object to be coated is a surface of a moving object, such as an outer panel of a ship, fuel consumption may often increase. To overcome this, if a coating film is smoothened by removing an existing film, e.g., blast finishing is required. In this case, an increase of an economical-burden becomes a problem.

The present invention has been made with a view to solve the above problems. An object of the invention is to provide a laminated antifouling coating film free from a problem such as peel-off in repairing the coating film by use of a hydrolyzable copolymer and easily repaired for regaining smoothness, and a method for producing the laminated antifouling coating film; and to provide a water-contact structure provided with a laminated antifouling coating film, more specifically, coated with the laminated antifouling coating film.

### Solution to Problem

The present inventors have intensively conducted studies in view of the aforementioned problems. As a result, they found that the above problems are overcome by a laminated antifouling coating film (hereinafter, also referred to as a "coating film sheet") having a predetermined constitution and composition, and that excellent antifouling property is exhibited over a long period of time. Based on the findings, they have accomplished the present invention. Of various types of adhesive layers, particularly a pressure-sensitive adhesive layer is selected and laminated with an antifouling coating film containing a hydrolyzable copolymer, with the result that a laminated antifouling coating film free from a problem such as peel-off during repairment of the antifouling coating film and easily repaired for regaining smoothness of the coating film can be surprisingly obtained.

That is, the present invention includes at least the following items.

### [Item 1]

A laminated antifouling coating film having
an antifouling coating film (af) and a pressure-sensitive adhesive layer (pa), wherein
the antifouling coating film (af) contains a hydrolyzable copolymer (A) having a constitutional unit derived from a hydrolyzable group-containing monomer (a1).

### [Item 2]

The laminated antifouling coating film according to item 1, wherein the antifouling coating film (af) contains 10 to 99 mass% of the hydrolyzable copolymer (A).

### [Item 3]

The laminated antifouling coating film according to item 1, wherein the hydrolyzable copolymer (A) has a constitutional unit derived from a metal ester group-containing monomer.

### [Item 4]

The laminated antifouling coating film according to item 1, wherein the hydrolyzable copolymer (A) has a constitutional unit derived from a metal ester group-containing monomer (a11), and the metal ester group-containing monomer (a11) is represented by the following formula (1): 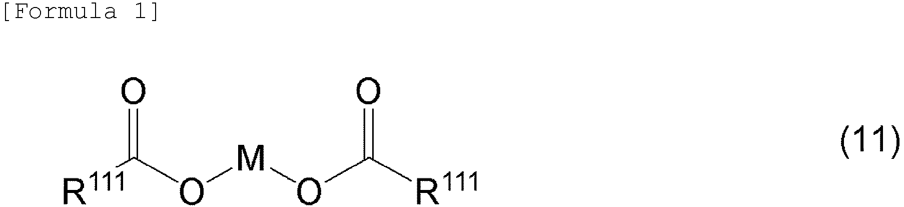 in the formula (1), R¹¹¹s each independently represent a monovalent group containing a terminal ethylenically unsaturated group, and M represents a metal atom.

### [Item 5]

The laminated antifouling coating film according to item 4, wherein M represents a zinc atom.

### [Item 6]

The laminated antifouling coating film according to item 1, wherein the hydrolyzable copolymer (A) has a constitutional unit derived from a polyorganosiloxane block-containing monomer (a2) represented by the following formula (2): 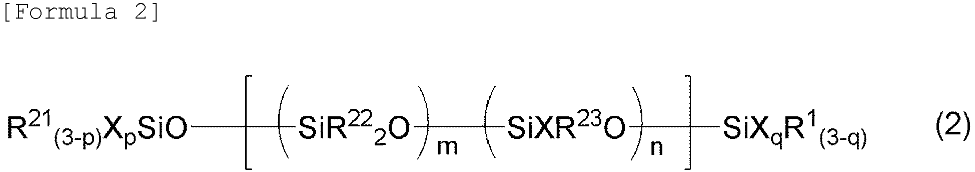 in the formula (2), R²¹, R²², and R²³ each independently represent a monovalent hydrocarbon group, Xs each independently represent a (meth)acryloyloxyalkyl group or a mercaptoalkyl group, m is 1 or more; n is 0 or more, p and q are each independently 0 or 1, and n + p + q is 1 or more.

### [Item 7]

The laminated antifouling coating film according to item 1, further having a middle layer (md), wherein the middle layer (md) is present between the antifouling coating film (af) and the pressure-sensitive adhesive layer (pa) .

### [Item 8]

The laminated antifouling coating film according to item 7, wherein the middle layer (md) contains a polymer (B) except the hydrolyzable polymer (A).

### [Item 9]

The laminated antifouling coating film according to item 8, wherein the polymer (B) contains an epoxy resin.

### [Item 10]

The laminated antifouling coating film according to item 7, wherein the middle layer (md) includes a base substrate layer (bs) made of a metal.

### [Item 11]

The laminated antifouling coating film according to item 1, wherein the antifouling layer (af) has an concave-convex structure on a surface thereof.

### [Item 12]

A water-contact structure provided with a laminated antifouling coating film, having a water-contact structure and the laminated antifouling coating film according to item 1.

### [Item 13]

A method for producing a laminated antifouling coating film, including
a step of laminating an antifouling coating film (af) and a pressure-sensitive adhesive layer (pa),
wherein the antifouling coating film (af) contains a hydrolyzable copolymer (A) having a constitutional unit derived from a hydrolyzable group-containing monomer (a1).

### [Item 14]

A method for coating a water-contact structure provided with a laminated antifouling coating film, including a step of attaching the laminated antifouling coating film according to item 1 to the water-contact structure.

### [Item 15]

The coating method according to item 14, further including a step of attaching another laminated antifouling coating film (hereinafter, referred to as a "second laminated antifouling coating film") to a boundary between a region (X) where the laminated antifouling coating film (hereinafter, referred to as a "first laminated antifouling coating film") formed by the attaching step is attached and a region (Y) where the first laminated antifouling coating film is not attached, such that at least a part of each of the regions (X) and (Y) is covered with the second laminated antifouling coating film.

### Advantageous Effects of Invention

It is possible to provide a water-contact structure provided with a laminated antifouling coating film exhibiting an excellent antifouling property over a long period of time by the laminated antifouling coating film of the present invention, since a problem of, e.g., peel-off, in repairment of an antifouling coating film using a hydrolyzable copolymer is not produced, and repairment for regaining smoothness of an antifouling coating film is easily made. In addition, even if, e.g., an antifouling coating composition, application method, and drying method are difficult to be employed at construction sites (due to, e.g., viscosity and VOC regulations), they can be employed for producing a laminated antifouling coating film. For the reason, there are advantages: work load in coating can be reduced, time for forming a coating film can be reduced, the thickness of a film can be accurately controlled, and smoothness of the film can be ensured, as compared to the cases where such a film is constructed at field sites. Furthermore, the dispersion of a volatile organic solvent into the atmosphere during construction can be suppressed. This is advantageous in view of worker's health during construction. Since the present invention employs the pressure-sensitive adhesive layer, it is possible for an antifouling coating film to have sufficient bending resistance, with the result that the film is excellent in workability during attachment and production. Since the pressure-sensitive adhesive layer not only has sufficient adhesion strength but also can be reversibly peeled off, it is easy to return the water-contact structure provided with the laminated antifouling coating film of the present invention to its original state. In addition, since the laminated antifouling coating film of the present invention has an excellent adhesive property onto the antifouling coating film including an old coating film, peel-off from the edge portion during winding or laminating process can be effectively avoided. Furthermore, when the laminated antifouling coating film is attached to a complicated shape such as a three-dimensional curved surface, it is easy to conduct work requiring making a cut in a film and laminating the film over another film. Moreover, since the laminated antifouling coating film of the present invention may have not only the antifouling coating film and the pressure-sensitive adhesive layer but also a sheet-like or tape-like base substrate layer, even when the antifouling coating film is excessively consumed, deterioration of the antifouling property can be avoided by the presence of the base substrate layer.

### Brief Description of Drawings

Fig. 1 is a schematic cross-sectional view of a laminated structure of a coating film sheet containing an antifouling laminated coating film prepared in Example 1.
Fig. 2 is a schematic cross-sectional view of a laminated structure of a coating film sheet containing an antifouling laminated coating film prepared in Example 2.
Fig. 3 is a schematic cross-sectional view of a laminated structure of a coating film sheet containing an antifouling laminated coating film prepared in Example 3.
Fig. 4 is a cross-sectional view showing an embodiment in which coating film sheets containing an antifouling laminated coating films prepared in Example 3 are arranged side by side and attached.
Fig. 5 is a schematic cross-sectional view of a laminated structure of a coating film sheet containing an antifouling laminated coating film prepared in Example 4.
Fig. 6 is a schematic cross-sectional view of a laminated structure of a coating film sheet containing an antifouling laminated coating film prepared in Example 5.
Fig. 7 is a schematic cross-sectional view of a laminated structure of a coating film sheet containing an antifouling laminated coating film prepared in Example 6.
Fig. 8 is a schematic cross-sectional view of a laminated structure of a coating film sheet containing an antifouling laminated coating film prepared in Example 7.
Fig. 9 is a schematic cross-sectional view of a laminated structure of a coating film sheet containing an antifouling laminated coating film prepared in Example 8.

### Description of Embodiments

Hereinafter, a laminated antifouling coating film of the present invention and a method for producing the laminated antifouling coating film, a water-contact structure provided with the laminated antifouling coating film, and others will be described in detail.

### - Laminated Antifouling Coating film -

The laminated antifouling coating film of the present invention has an antifouling coating film (af) and a pressure-sensitive adhesive layer (pa). The antifouling coating film (af) contains a hydrolyzable copolymer (A) having a constitutional unit derived from a hydrolyzable group-containing monomer (a1).

### [(af) Antifouling Coating film]

The antifouling coating film (af) of the present invention is not particularly limited as long as it contains the hydrolyzable copolymer (A) having a constitutional unit derived from the hydrolyzable group-containing monomer (a1), and can be formed from an antifouling coating composition containing the hydrolyzable copolymer (A).

### <(A) Hydrolyzable Copolymer>

The hydrolyzable copolymer (A) has a constitutional unit derived from the hydrolyzable group-containing monomer (a1), and, if necessary, may further have a constitutional unit derived from a monomer copolymerizable with the hydrolyzable group-containing monomer (a1), for example, a constitutional unit derived from a polyorganosiloxane block-containing monomer (a2) and a constitutional unit derived from another monomer.

### (a1) Hydrolyzable Group-containing Monomer

As the hydrolyzable group-containing monomer (a1), those used for producing hydrolyzable copolymers known in the art can be used in the present invention. Examples thereof include a metal ester group-containing monomer (a11) (in the specification, sometimes referred to as the monomer (a11)) represented by the formula (11) later described; a metal ester group-containing monomer (a12) (in the specification, sometimes referred to as the monomer (a12)) represented by the formula (12) later described; and a silyl ester group-containing monomer (a13) (in the specification, sometimes referred to as the monomer (a13)) represented by the formula (13) later described. As the hydrolyzable polymer (A), any one of the monomers (a11) to (a13) may be used. For example, two or more types different in, **e.g.,** structure and ratio of a constitutional unit derived from the monomer (a1) may be used.

### (a11) Metal Ester Group-containing Monomer

The metal ester group-containing monomer (a11) is a monomer represented by the following formula (11). As the monomers (a11), any monomers may be used singly or in combination of two or more.

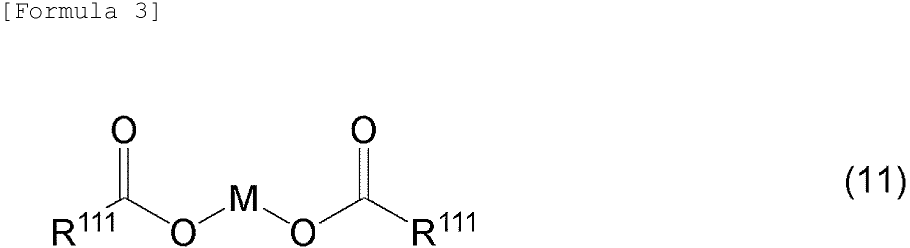

In the formula (1), R¹¹¹s each independently represent a monovalent group containing a terminal ethylenically unsaturated group (CH₂=C<), and M represents a copper atom or a zinc atom.

The number of carbon atoms of the terminal ethylenically unsaturated group represented by R¹¹¹ is preferably 2 to 50, more preferably 2 to 30, still more preferably 2 to 10, and particularly preferably 2 to 6.

R¹¹¹ may further contain an ethylenically unsaturated group at a site other than the terminal, and more preferably contains an ethylenically unsaturated group only at the terminal.

R¹¹¹ is preferably an organic group containing a terminal ethylenically unsaturated group (in the specification, referred to as a "terminal ethylenically unsaturated organic group"). Examples of the terminal ethylenically unsaturated organic group include unsaturated aliphatic hydrocarbon groups whose structure may be partially substituted with an ester bond, an amide bond, or an ether bond. Specific examples of the terminal ethylenically unsaturated organic group include a group obtained by removing a carboxy group from an aliphatic unsaturated monocarboxylic acid containing a terminal ethylenically unsaturated group, such as acrylic acid (also referred to as 2-propenoic acid), methacrylic acid (also referred to as 2-methyl-2 propenoic acid), 3-butenoic acid, 4-pentenoic acid, 10-undecenoic acid, and (meth)acryloyloxyalkylcarboxylic acid [e.g., 3-(meth)acryloyloxypropionic acid, 3-(meth)acryloyloxy-2-methylpropionic acid]; and a group obtained by removing a single carboxy group from an aliphatic unsaturated dicarboxylic acid containing a terminal ethylenically unsaturated group, such as itaconic acid. The terminal ethylenically unsaturated organic group is more preferably a group obtained by removing a carboxy group from an aliphatic unsaturated monocarboxylic acid containing a terminal ethylenically unsaturated group; still more preferably a group obtained by removing a carboxy group from acrylic acid, methacrylic acid, or (meth)acryloyloxyalkylcarboxylic acid, and particularly preferably a group obtained by removing a carboxy group from acrylic acid or methacrylic acid.

The monomer (a11) is preferably a monomer (in the specification, sometimes referred to as a "monomer (a1')") represented by the following formula (11'). The monomer (a1') corresponds to a case where both of the terminal ethylenically unsaturated organic groups represented by two R¹¹¹s in the monomer (1) are groups each obtained by removing a carboxy group from acrylic acid or methacrylic acid.

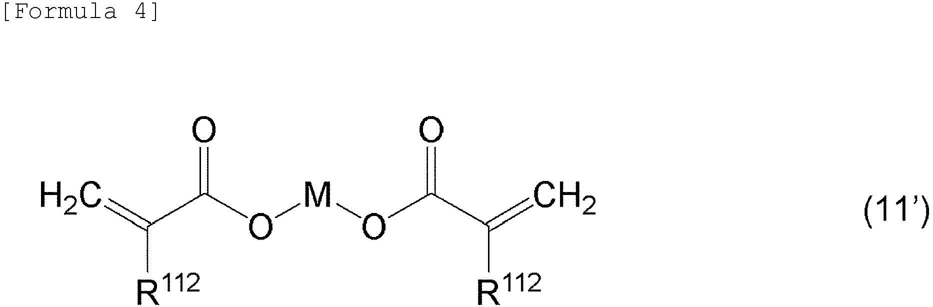

In the formula (11'), R¹¹²s each independently represent a hydrogen atom or a methyl group, and M represents a copper atom or a zinc atom.

Examples of the monomer (a11) include zinc diacrylate, zinc dimethacrylate, zinc acrylate methacrylate, zinc di(3-acryloyloxypropionate), zinc di(3-methacryloyloxypropionate), zinc di(3-(meth)acryloyloxy-2-methylpropionate), copper diacrylate, copper dimethacrylate, copper acrylate methacrylate, copper di(3-acryloyloxypropionate), copper di(3-methacryloyloxypropionate), and copper di(3-(meth)acryloyloxy-2-methylpropionate). Of these, zinc diacrylate, zinc dimethacrylate, or zinc acrylate methacrylate is preferable for the reason that, e.g., an antifouling coating film having a sufficient antifouling property can be easily obtained. Note that, zinc diacrylate, zinc dimethacrylate, zinc methacrylate acrylate, copper diacrylate, copper dimethacrylate, or copper acrylate methacrylate corresponds to the monomer (a11').

### (a12) Metal Ester Group-containing Monomer

The metal ester group-containing monomer (a12) is a monomer represented by the following formula (12). As the monomer (a12), any monomers may be used singly or in combination of two or more.

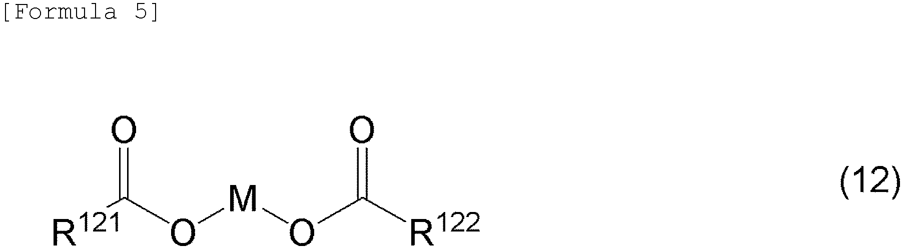

In the formula (12), R¹²² represents a monovalent group containing a terminal ethylenically unsaturated group (CH₂=C<), R¹²² represents a monovalent organic group having 1 to 30 carbon atoms and not containing a terminal ethylenically unsaturated group, and M represents a copper atom or a zinc atom.

For technical matters regarding the terminal ethylenically unsaturated group represented by R¹²¹, the technical matters regarding the terminal ethylenically unsaturated group represented by R¹¹¹ of the formula (11) and described in the specification can be directly referred to.

Examples of R¹²² include organic groups not containing a terminal ethylenically unsaturated group (in the specification, referred to as a "non-terminal ethylenically unsaturated organic group") such as an aliphatic hydrocarbon group having 1 to 30 carbon atoms, an alicyclic hydrocarbon group having 3 to 30 carbon atoms, and an aromatic hydrocarbon group having 6 to 30 carbon atoms. The non-terminal ethylenically unsaturated organic group may further contain a substituent (for example, hydrogen group).

The aliphatic hydrocarbon group in the non-terminal ethylenically unsaturated organic group may be either linear or branched, and may be a saturated aliphatic hydrocarbon group or an unsaturated aliphatic hydrocarbon group (limited to those not containing a terminal ethylenically unsaturated group). The number of carbon atoms of the aliphatic hydrocarbon group is 1 to 30, preferably 1 to 28, more preferably 1 to 26, and still more preferably 1 to 24. The aliphatic hydrocarbon group may be substituted with an alicyclic hydrocarbon group or an aromatic hydrocarbon group.

The alicyclic hydrocarbon group in the non-terminal ethylenically unsaturated organic group may be a saturated alicyclic hydrocarbon group or an unsaturated alicyclic hydrocarbon group. The number of carbon atoms of the alicyclic hydrocarbon group is 3 to 30, preferably 4 to 20, more preferably 5 to 16, and still more preferably 6 to 12. The alicyclic hydrocarbon group may be substituted with an aliphatic hydrocarbon group or an aromatic hydrocarbon group.

The number of carbon atoms of the aromatic hydrocarbon group in the non-terminal ethylenically unsaturated organic group is 6 to 30, preferably 6 to 24, more preferably 6 to 18, and still more preferably 6 to 10. The aromatic hydrocarbon group may be substituted with an aliphatic hydrocarbon group or an alicyclic hydrocarbon group.

R¹²² preferably represents an organic acid residue derived from a monobasic acid. Specific examples thereof include groups obtained by removing a carboxy group from organic acids such as versatic acid, palmitic acid, stearic acid, isostearic acid, oleic acid, linoleic acid, linolenic acid, abietic acid, neoabietic acid, pimaric acid, dehydroabietic acid, 12-hydroxystearic acid and naphthenic acid. Of these, a group obtained by removing a carboxy group from abietic acid, versatic acid, or naphthenic acid is preferable, and a group obtained by removing a carboxy group from abietic acid or versatic acid is more preferable. Note that, versatic acid is a generic term for a mixture of highly branched carboxylic acids having 9 to 11 carbon atoms, mainly 10 carbon atoms.

As the monomer (a12), a monomer (in the specification, sometimes referred to as a "monomer (a12'))" represented by the following formula (12') is preferable. The monomer (a12') corresponds to a case where the terminal ethylenically unsaturated organic group represented by R¹²¹ in the monomer (12) is a group obtained by removing a carboxy group from acrylic acid or methacrylic acid.

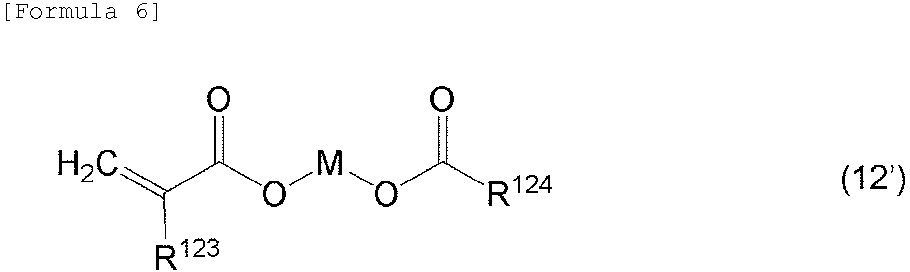

In the formula (12'), R¹²³ represents a hydrogen atom or a methyl group; R¹²⁴ is the same as defined in R¹²² of the formula (12), and M represents a copper atom or a zinc atom.

Examples of the monomer (a12) include zinc 3-(meth)acryloyloxypropionate rosin, zinc 3-(meth)acryloyloxypropionate versatate, zinc (meth)acrylate rosin, zinc (meth)acrylate versatate, zinc (meth)acrylate naphthenate, and copper 3-(meth)acryloyloxypropionate rosin, copper 3-(meth)acryloyloxypropionate versatate, copper (meth)acrylate rosin, copper (meth)acrylate versatate, and copper (meth)acrylate naphthenate. Note that, zinc (meth)acrylate rosin, zinc (meth)acrylate versatate, zinc (meth)acrylate naphthenate, copper (meth)acrylate rosin, copper (meth)acrylate versatate, or copper (meth)acrylate naphthenate corresponds to the monomer (a12').

### (a13) Silyl Ester Group-containing Monomer

The silyl ester group-containing monomer (a13) is a monomer represented by the following formula (13). As the monomer (a13), any monomers may be used singly or in combination of two or more.

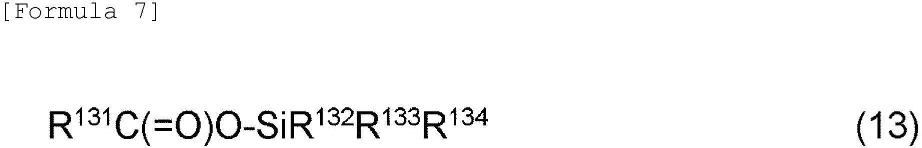

In the formula (13), R¹³² represents a monovalent group containing an ethylenically unsaturated group, and R¹³², R¹³³ and R¹³⁴ each independently represent a monovalent hydrocarbon group.

In the formula (13), examples of R¹³¹ include a group obtained by removing a carboxy group from acrylic acid or methacrylic acid, and a group obtained by removing a carboxy group from an alkylmaleic acid. In view of improvement of the long-term antifouling property and water resistance of the antifouling coating film, a group obtained by removing a carboxy group from methacrylic acid is more preferable.

In Formula (13), R¹³², R¹³³ and R¹³⁴ each independently represent a monovalent hydrocarbon group. Examples of the hydrocarbon group include a linear, branched, or cyclic alkyl group and aryl group. The number of carbon atoms of the alkyl group is preferably 1 to 12, more preferably 1 to 8, and still more preferably 1 to 4. The number of carbon atoms of the aryl group is preferably 6 to 14 and more preferably 6 to 10. In view of improvement of long-term antifouling property and water resistance by imparting appropriate hydrolyzability to the antifouling coating film, it is preferable that R¹³² to R¹³⁴ are selected from an isopropyl group, an n-propyl group, a sec-butyl group, an n-butyl group, and a phenyl group, and it is more preferable that R¹³² to R¹³⁴ are all isopropyl groups.

That is, the silyl ester group-containing monomer is most preferably triisopropylsilyl methacrylate.

### · Copolymerization Monomer

The hydrolyzable copolymer (A) may further contain a constitutional unit, which is derived from a monomer except the monomer (a1) and copolymerizable with the hydrolyzable group-containing monomer (a1), if necessary. Examples of such an optional monomer include monomers which do not contain a metal ester group and have an ethylenically unsaturated group, such as an organosiloxane block-containing monomer (a2) (in the specification, sometimes referred to as "monomer (a2)"); a (meth)acrylate or an ester thereof (a3) (in the specification, sometimes referred to as "monomer (a3)"); and a vinyl compound (a4) (in the specification, sometimes referred to as "monomer (a4) ") .

### (a2) Polyorganosiloxane Block-containing Monomer

The monomer (a2), that is, the polyorganosiloxane block-containing monomer (a2), is a monomer represented by the following formula (2). As the monomer (a2), any monomers may be used singly or in combination of two or more.

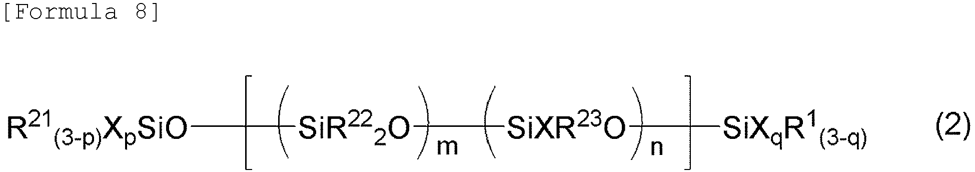

In the formula (2), R²¹, R²², and R²³ each independently represent a monovalent hydrocarbon group, Xs each independently represent a (meth)acryloyloxyalkyl group or a mercaptoalkyl group, m is 1 or more, n is 0 or more, p and q are each independently 0 or 1, and n + p + q is 1 or more.

Examples of the hydrocarbon group represented by R²¹, R²², and R²³ include a linear, branched, or cyclic alkyl group and aryl group. The number of carbon atoms in the alkyl group is preferably 1 to 12, more preferably 1 to 8, and still more preferably 1 to 4. The number of carbon atoms in the aryl group is preferably 6 to 14, and more preferably 6 to 10. In view of easy polymerization, it is preferable that R²¹, R²², and R²³ are each independently an alkyl group such as a methyl group or a butyl group.

Examples of the group represented by X include (meth)acryloyloxyalkyl groups such as a (meth)acryloyloxyethyl group, a (meth)acryloyloxypropyl group, and a (meth)acryloyloxybutyl group; and mercaptoalkyl groups such as a mercaptomethyl group, a mercaptoethyl group, a mercaptopropyl group, and a mercaptobutyl group. The group represented by X is preferably a (meth)acryloyloxyalkyl group in order that polymerization uniformly proceeds and preferably a mercaptoalkyl group in order to reduce viscosity of the hydrolyzable polymer (A) to attain easy-handling.

Symbols m and n refer to an average number of moles of (SiR²²₂O) and (SiXR²³O) to be added, respectively. The total of m + n is preferably 2 or more. That is, the organosiloxane block-containing monomer (a2) is preferably a polyorganosiloxane block-containing monomer.

Note that, in the specification, two or more different repeating units described side by side in a square bracket as in the formula (2) indicate that these repeating units may be each repeated, e.g. at random, alternately, or in block, in any order. That is, for example, in the case of the formula -[Y₃-Z₃]-(herein, Y and Z each represent a repeating unit), the repeating units may appear at random such as -YYZYZZ-, alternately such as - YZYZYZ-, or in block such as -YYYZZZ- or -ZZZYYY-.

A first embodiment of the monomer (a2) includes a monomer (a21) in which n is 0, p is 1, and q is 0. It is preferable that the hydrolyzable copolymer (A) contains a constitutional unit derived from such a monomer (a21) because, for example, an antifouling coating film excellent in antifouling property is easily formed from the antifouling coating composition. In the monomer (a21), m is preferably 3 or more, more preferably 5 or more, and preferably 200 or less, more preferably 70 or less in view of, e.g., easy polymerization.

Examples of the monomer (a21) that can be used include commercially available products manufactured by JNC Corporation, such as "FM-0711" (single terminal methacryloyloxyalkyl-modified organopolysiloxane, number average molecular weight: 1,000), "FM-0721" (single terminal methacryloyloxyalkyl-modified organopolysiloxane, number average molecular weight: 5,000), and "FM-0725" (single terminal methacryloyloxyalkyl-modified organopolysiloxane, number average molecular weight: 10,000); and commercially available products manufactured by Shin-Etsu Chemical Co., Ltd., such as "X-22-174ASX" (single terminal methacryloyloxyalkyl-modified organopolysiloxane, functional group equivalent: 900 g/mol), "KF-2012" (single terminal methacryloyloxyalkyl-modified organopolysiloxane, functional group equivalent: 4,600 g/mol), and X-22-2426 (single terminal methacryloyloxyalkyl-modified organopolysiloxane, functional group equivalent: 12,000 g/mol).

A second embodiment of the monomer (a2) includes a monomer (a22) in which n is 0 and p and q each represent 1. It is preferable that the hydrolyzable copolymer (A) contains a constitutional unit derived from such a monomer (a22) because an antifouling coating film excellent in repairability, in other words, excellent in adhesive property to an old antifouling coating film (immersed in seawater) can be easily formed from the antifouling coating composition. In the monomer (a22), m is preferably 3 or more, more preferably 5 or more, and preferably 200 or less, more preferably 70 or less in view of, e.g., easy polymerization.

Examples of the monomer (a22) that can be used include commercially available products manufactured by JNC Corporation such as "FM-7711" (both terminal methacryloyloxyalkyl-modified organopolysiloxane, number average molecular weight: 1,000), "FM-7721" (both terminal methacryloyloxyalkyl-modified organopolysiloxane, number average molecular weight: 5,000), and "FM-7725" (both terminal methacryloyloxyalkyl-modified organopolysiloxane, number average molecular weight: 10,000); and commercially available products manufactured by Shin-Etsu Chemical Co., Ltd., such as "X-22-164" (both terminal methacryloyloxyalkyl-modified organopolysiloxane, functional group equivalent: 190 g/mol), "X-22-164AS" (both terminal methacryloyloxyalkyl-modified organopolysiloxane, functional group equivalent: 450 g/mol), "X-22-164A" (both terminal methacryloyloxyalkyl-modified organopolysiloxane, functional group equivalent: 860 g/mol), "X-22-164B" (both terminal methacryloyloxyalkyl-modified organopolysiloxane, functional group equivalent: 1630 g/mol), "X-22-164C" (both terminal methacryloyloxyalkyl-modified organopolysiloxane, functional group equivalent: 2,370 g/mol), "X-22-164E" (both terminal methacryloyloxyalkyl-modified organopolysiloxane, functional group equivalent: 3,900 g/mol), and "X-22-167B" (both terminal mercaptoalkyl-modified organopolysiloxane, functional group equivalent: 1,670 g/mol).

A third embodiment of the monomer (a2) includes a monomer (a23) in which n is 1 or more. It is preferable that the hydrolyzable copolymer (A) contains a constitutional unit derived from such a monomer (a23) because, for example, the antifouling coating composition decreases in viscosity and tends to be easily handled. In the monomer (a23), m is preferably 50 to 1,000, and n is preferably 1 to 30.

Examples of the monomer (a23) that can be used include commercially available products manufactured by Shin-Etsu Chemical Co., Ltd., such as "KF-2001" (side chain mercaptoalkyl-modified organopolysiloxane, functional group equivalent: 1,900 g/mol) and "KF-2004" (side chain mercaptoalkyl-modified organopolysiloxane, functional group equivalent: 30,000 g/mol).

### (a3) (meth)Acrylic acid or Ester Thereof

The monomer (a3), that is, (meth)acrylic acid or an ester thereof (a3) is a compound represented by the following formula (3). As the monomer (a3), any monomers may be used singly or in combination of two or more.

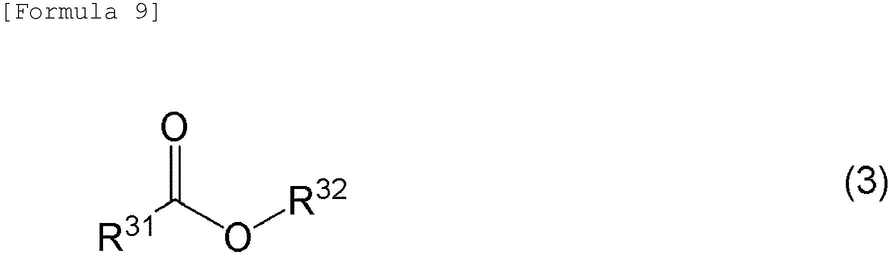

In the formula (3), R³¹ represents a monovalent group containing an ethylenically unsaturated group, and R³² represents a hydrogen atom, an alkyl group, an aryl group, an alkoxyalkyl group, a hydroxyalkyl group, or a glycidyl group.

A first embodiment of the monomer (a3) includes a monomer (a31) in which R³² is a hydrogen atom, for example, (meth)acrylic acid. When the hydrolyzable polymer (A) contains such a monomer (a31), the resulting antifouling coating composition tends to be excellent in adhesive property to an old antifouling coating film (immersed in seawater), low in viscosity, and excellent in coating workability, coating film consumption degree of the antifouling coating film to be formed tends to increase.

A second embodiment of the monomer (a3) includes a monomer (a32) in which R³² is an alkyl group or an aryl group. The alkyl group represented by R³² may have any one of the linear, branched, and cyclic structures, and the number of carbon atoms is preferably 1 to 20, more preferably 1 to 12, and still more preferably 1 to 6. When the hydrolyzable copolymer (A) contains such a monomer (a32), the antifouling coating film formed from the resulting antifouling coating composition tends to be appropriately suppressed in coating film consumption degree (renewal rate) of coating film without significantly damaging the antifouling property, and tends to have excellent damage resistance and/or crack resistance.

Specific examples of the monomer (a32) include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, phenyl (meth)acrylate, and benzyl (meth)acrylate. For example, at least one selected from the group consisting of methyl (meth)acrylate, ethyl (meth)acrylate, n-butyl (meth)acrylate, and cyclohexyl (meth)acrylate is preferably used as the monomer (a32).

A third embodiment of the monomer (a3) includes a monomer (a33) in which R³² is an alkoxyalkyl group. The alkoxyalkyl group represented by R³² may have any one of the linear, branched, and cyclic structures, and the number of carbon atoms (total number of carbon atoms contained in an alkyl group in an alkoxy group and carbon atoms contained in an alkyl group) is preferably 1 to 20, more preferably 1 to 12, and still more preferably 1 to 6. When the hydrolyzable copolymer (A) contains such a monomer (a33), the antifouling coating film formed from the resulting antifouling coating composition tends to maintain an appropriate coating film consumption degree over a long period of time.

Specific examples of the monomer (a33) include 2-methoxyethyl (meth)acrylate, 2-ethoxyethyl (meth)acrylate, 3-methoxybutyl (meth)acrylate, 4-methoxybutyl (meth)acrylate, 3-methoxy-n-propyl (meth)acrylate, 2-propoxyethyl (meth)acrylate, 2-butoxyethyl (meth)acrylate, isobutoxybutyl diglycol (meth)acrylate, 2-phenoxyethyl (meth)acrylate, methoxy polyethylene glycol (meth)acrylate, ethoxy polyethylene glycol (meth)acrylate, butoxy polyethylene glycol (meth)acrylate, and phenoxy polyethylene glycol (meth)acrylate. For example, it is preferable to use 2-methoxyethyl (meth)acrylate as the monomer (a33).

A fourth embodiment of the monomer (a3) includes a monomer (a34) in which R³² is a hydroxyalkyl group. The hydroxyalkyl group represented by R³² may have any one of the linear, branched, and cyclic structures, and the number of carbon atoms is preferably 1 to 20, more preferably 1 to 12, and still more preferably 1 to 6. When the hydrolyzable polymer (A) contains such a monomer (a34), the antifouling coating film formed from the resulting antifouling coating composition tends to increase a coating film consumption degree.

Specific examples of the monomer (a34) include hydroxymethyl (meth)acrylate, 2-hydroxyethyl (meth)acrylate, 2-hydroxypropyl (meth)acrylate, 4-hydroxybutyl (meth)acrylate, and 2-hydroxy-3-phenoxypropyl (meth)acrylate.

A fifth embodiment of the monomer (a3) includes a monomer (a35) in which R³² is a glycidyl group, for example, glycidyl (meth)acrylate. When the hydrolyzable copolymer (A) contains such a monomer (a35), the antifouling coating film formed from the resulting antifouling coating composition tends to have a high consumption degree of a coating film.

Of the monomers (a3), the monomer (a32) and/or the monomer (a33) are preferably contained in the hydrolyzable copolymer (A), for the reason that the antifouling coating film formed from the resulting antifouling coating composition is excellent in antifouling property; that the coating film consumption degree can be appropriately controlled; and that the coating film is also excellent in damage resistance and/or crack resistance.

When the hydrolyzable copolymer (A) contains a constitutional unit derived from the monomer (a3), it is preferable to contain a constitutional unit derived from a monomer having a glass transition point of 0°C or less in terms of a homopolymer, for the reason that the laminated antifouling coating film has excellent bending resistance resulting in excellent workability in production and construction. The glass transition points of the monomer (a3) and its homopolymer are for example, as follows: ethyl acrylate: -24°C, butyl acrylate: -54°C, 2-methoxyethyl methacrylate: -2°C, and 2-methoxyethyl acrylate: -50°C.

### (a4) Vinyl Compound

Examples of the monomer (a4), that is, the vinyl compound, include styrene, α-methylstyrene, vinyl acetate, vinyl benzoate, vinyl toluene, acrylonitrile, vinyl pyridine, vinyl pyrrolidone, and vinyl chloride. As the monomer (a4), any monomers may be used singly or in combination of two or more.

### · Ratio of Constitutional Units

The type and ratio of the constitutional unit derived from each of the monomer (a1) contained in the hydrolyzable copolymer (A), the monomer (a2) used if necessary, and other monomers can be appropriately controlled in consideration of, e.g., the effect of the present invention and other technical matters.

When the hydrolyzable copolymer (A) has a constitutional unit derived from the monomer (a11), the content of the constitutional unit derived from the monomer (a11) relative to 100 mass% of the all constitutional units is preferably 5 mass% or more, more preferably 8 mass% or more, still more preferably 10 mass% or more, and preferably 50 mass% or less, more preferably 40 mass% or less, still more preferably 30 mass% or less for improving viscosity and coating workability of an antifouling coating composition, physical properties of the resulting antifouling coating film, such as water resistance and bending resistance, and antifouling property thereof.

When the hydrolyzable copolymer (A) has a constitutional unit derived from the monomer (a12), the amount of the constitutional unit derived from the monomer (a12) relative to 100 parts by mass of all the constitutional units is preferably 5 mass% or more, more preferably 10 mass% or more, still more preferably 15 mass% or more, and preferably 50 mass% or less, more preferably 40 mass% or less, still more preferably 30 mass% or less for improving viscosity and coating workability of an antifouling coating composition, physical properties of the resulting antifouling coating film, such as water resistance and bending resistance, and antifouling property thereof.

When the hydrolyzable copolymer (A) has a constitutional unit derived from the monomer (a13), the amount of the constitutional unit derived from the monomer (a13) relative to 100 parts by mass of all the constitutional units is preferably 30 mass% or more, more preferably 40 mass% or more, still more preferably 45 mass% or more, and preferably 80 mass% or less, more preferably 75 mass% or less, still more preferably 70 mass% or less for improving viscosity and coating workability of an antifouling coating composition, physical properties of the resulting antifouling coating film, such as water resistance and bending resistance, and antifouling property thereof.

In addition, the hydrolyzable polymer (A) preferably has at least a constitutional unit derived from the organosiloxane block-containing monomer (a2) in addition to a constitutional unit derived from the monomer (a1) and/or a constitutional unit derived from the monomer (a2).

When the hydrolyzable polymer (A) contains a constitutional unit derived from the polyorganosiloxane block-containing monomer (a2), the ratio thereof relative to 100 mass % of all constitutional units in the hydrolyzable copolymer (A) is preferably 5 mass % or more, more preferably 8 mass % or more, and preferably 20 mass % or less, more preferably 15 mass % or less.

Of the monomers (a3), the monomer (a32) and/or the monomer (a33) are preferably contained in the hydrolyzable copolymer (A) because an antifouling coating film formed from the resulting antifouling coating composition is excellent in bending resistance and workability during production and construction of the laminated antifouling coating film.

Note that the ratio of individual constitutional units in the hydrolyzable polymer (A) can be measured by, **e.g.,** nuclear magnetic resonance spectroscopy (NMR) or gas chromatograph mass spectrometry (GC-MS) according to a routine method, or can also be calculated from the amounts of individual monomers used in synthesizing the hydrolyzable polymer (A). Note that the constitutional units derived from a polymerization initiator and a chain transfer agent are not included in the constitutional units of the hydrolyzable copolymer (A).

The number average molecular weight (Mn) and the weight average molecular weight (Mw) of the hydrolyzable copolymer (A) can be appropriately controlled so that a desired effect of the present invention can be obtained and in consideration of, e.g., the viscosity and storage stability of the resulting antifouling coating composition, and the coating film consumption degree (elution rate, renewability) of the resulting antifouling coating film. The Mn of the hydrolyzable copolymer (A) is preferably 500 or more, more preferably 700 or more, and preferably 10,000 or less, more preferably 5,000 or less. The Mw of the hydrolyzable copolymer (A) is preferably 1,000 or more, more preferably 1,200 or more, and particularly preferably 1,500 or more, and is preferably 15,000 or less, more preferably 12,000 or less, and particularly preferably 10,000 or less.

Note that Mn and Mw can be determined by measuring molecular weights by gel permeation chromatography (GPC) in accordance with a routine method, and obtaining a standardpolystyrene equivalent of them by calculation. For more specific measurement methods and conditions for Mn and Mw, Examples (later described) can be referred to.

The glass transition temperature of a hydrolyzable copolymer (A) is preferably 0°C to 60°C, and more preferably 10 to 50°C for obtaining a desired effect of the present invention and excellent bending resistance and appropriate extensibility of the resulting laminated coating film.

Note that, the glass transition point of the hydrolyzable copolymer can be measured by, e.g., a differential scanning calorimeter (DSC) according to a routine method.

### · Content of Hydrolyzable Copolymer (A)

The content of a hydrolyzable copolymer (A) in the antifouling coating film (af) can be appropriately controlled depending on the type and properties of the component, so that a desired effect of the present invention can be obtained and in consideration of the coating workability of the antifouling coating composition used for forming the antifouling coating film (af) and other technical matters. The content of the hydrolyzable copolymer (A) is, for example, 1 to 99 mass%, preferably 5 to 90, more preferably 10 to 80 mass% relative to 100 mass% of the antifouling coating film (af), that is, 100 mass% of the solid content of the antifouling coating composition.

Note that, in the specification, the "solid content" of the antifouling coating composition used in the present invention or each of the components contained therein (for example, a solution containing the component (A), and an oxidized polyethylene wax or a fatty acid amide wax as an anti-sagging agent/anti-settling agent (H)), refers to components obtained by removing a volatile component contained as a solvent in the underwater-use antifouling coating composition of the present invention or in individual components. Such a solid content can be calculated as a mass ratio of a dried antifouling coating composition of the present invention or individual components obtained by a routine method (dried at 125°C for 1 hour in a hot-air dryer) relative to the mass of the underwater-use antifouling coating composition of the present invention or individual components. More specifically, calculation is carried out in accordance with JIS K 5601-1-2: 2008 as follows: The object (1 ± 0.1 g) to be measured is weighed on a flat-bottom dish, uniformly spread over the bottom surface using a wire known in mass, and dried at 125°C for 1 hour at 1 atm. The mass of the wire is subtracted from the obtained heating residue to obtain a value of mass percentage.

When a numerical value of a component as a solid content is shown in, e.g., a label or a catalog for a product, the numerical value can be regarded as the solid content of the component. When the compositional formulation (types and amounts of individual components and solid contents thereof) of the antifouling coating composition of the present invention is already found by the above-described measurement method, the numerical value calculated based on the compositional formulation can be regarded as the solid content of the antifouling coating composition of the present invention.

### · Concave-convex Structure

In an embodiment of the present invention, the antifouling coating film (af) has a "concave-convex structure" on a surface thereof. The "concave-convex structure" is typically a structure having periodically repeated fine concave-convexes formed on the surface of the antifouling coating film (af) in contact with water. Examples of the concave-convex structure include a "riblet surface structure" having a function to suppress generation of a turbulent flow when a fluid comes into contact, thereby reducing resistance (friction coefficient), and a surface structure having protrusions such as a prismatic shape, a cylindrical shape, and a triangular shape, with the proviso that the protrusions may or may not be in contact with each other.

The riblet surface structure is characterized by the difference in height between the concave and convex portions, i.e. the riblet height. The riblet height (h) preferably falls within the range of 0.1 to 1000 µm, more preferably in the range of 0.5 to 500 µm, and still more preferably in the range of 1 to 100 µm for easily forming a riblet structure. Note that, the riblet height (h) is obtained by measuring an average line-roughness Rzjis (JIS B 0601: 2001) of 10 points in the surface of an arbitrary cross-section of the riblet in a range in which periodic concave-convex structure can be recognized.

Examples of the riblet surface structure include a groove structure as disclosed in JP 2011-530443 A and a structure having a specific periodic pattern as disclosed in JP 2012-508128 A. For easily forming the structure, a groove structure is preferable. When the riblet structure is a groove, examples of the groove include a V-shaped groove, a U-shaped groove, a rectangular groove, and a trapezoidal groove. The average distance between peaks of concave-convex structures in the longitudinal direction and the vertical direction of the groove structure, that is, pitch S [µm] of the groove structure is specified in order to easily form the riblet structure as follows. The ratio of the pitch (S) to the riblet height (h), i.e., S/h, preferably falls within the range of 0.5 to 5, more preferably in a range of 0.8 to 4, and still more preferably in a range of 1.5 to 3.5.

### <Optional Components>

The antifouling coating composition to be used in the present invention may further contain components other than the hydrolyzable copolymer (A), if necessary. Examples of the optional components include an antifouling agent (C), a pigment (D), a monocarboxylic acid compound (E) and/or a metal salt thereof, a plasticizer (F), an antifoaming agent (G), an anti-sagging agent/anti-settling agent (H), a binder component (I) (excluding a polymer (B) except the hydrolyzable copolymer (A) described later), and a solvent (J) (in the specification, sometimes referred to as components (C) to (J)). These optional components are not essential for producing the effect of the present invention, but can be components naturally required in practice or routinely used for producing or using an antifouling coating composition, easily producing and enhancing the effect of the present invention; or producing an effect except that of the present invention. Further, if desired, other components used in a general antifouling coating composition can be employed as components of the antifouling coating composition to be used in the present invention.

### <(C) Antifouling Agent>

The antifouling coating composition to be used in the present invention can exhibit a certain level of excellent antifouling performance even if an antifouling agent (C) is not contained, but the antifouling agent (C) may be contained, if necessary. Examples of the antifouling agent (C) include cuprous oxide, metal pyrithione (e.g., copper pyrithione, zinc pyrithione), (+/-) 4-[1-(2,3-dimethylphenyl)ethyl]-1H-imidazole (also referred to as medetomidine), 4-bromo-2-(4-chlorophenyl)-5-(trifluoromethyl)-1H-pyrrol-3-carbonitrile (also referred to as Tralopyril), 4,5 dichloro-2-n-octyl-4-isothiazolin-3-one (also referred to as DCOIT), pyridine triphenylborane, 4-isopropyl pyridine diphenylmethylborane, N,N-dimethyl-N'-(3,4-dichlorophenyl)urea (also referred to as Diuron), N-(2,4,6-trichlorophenyl)maleimide, 2,4,5,6-tetrachloroisophthalnitrile, 2-methylthio-4-tert-butylamino-6-cyclopropylamino-1,3,5-triazine (also referred to as Sibutrin), bisdimethyldithiocarbamoylzincethylene bisdithiocarbamate (also referred to as polycarbamate), chloromethyl-n-octyl disulfide, N,N'-dimethyl-N'-phenyl-(N-fluorodichloromethylthio) sulfamide (also referred to as Dichlofluanid), tetraalkylthiuram disulfide (also referred to as TMTD), zinc dimethyl dithiocarbamate (also referred to as Ziram), zinc ethylenebisdithiocarbamate, 2,3-dichloro-N-(2',6'-diethylphenyl)maleimide, and 2,3-dichloro-N-(2'-ethyl-6'-methylphenyl)maleimide. As the antifouling agent (C), arbitral antifouling agents may be used singly, or in combination of two or more. For example, cuprous oxide, metal pyrithione, medetomidine, Tralopyril, and DCOIT are preferable as the antifouling agent (C).

When the antifouling coating composition to be used in the present invention contains an antifouling agent (C), the content thereof can be appropriately controlled depending on, e.g., the purpose (antifouling performance) and the type of component. For example, if cuprous oxide is used, the content thereof is preferably 10 to 70 mass% and more preferably 20 to 50%; if metal pyrithione is used, the content thereof can be 0.1 to 15 mass% and more preferably 0.5 to 8 mass%; if medetomidine is used, the content thereof is preferably 0.01 to 1 mass% and more preferably 0.03 to 0.5 mass%; if Tralopyril is used, the content thereof is preferably 0.5 to 10 mass%, more preferably 3 to 7 mass%; and if DCOIT is used, the content thereof is preferably 0.1 to 8 mass%, and more preferably 0.5 to 5 mass%; relative to 100 mass% of the solid content of the composition.

### <(D) Pigment>

The antifouling coating composition to be used in the present invention can contain a pigment (D) for the purpose of coloring the coating film and masking the base and/or controlling the strength of the coating film to an appropriate level. As the pigments (D), arbitral pigments may be used singly, or in combination of two or more.

Examples of the pigment (D) include extender pigments such as zinc oxide, zinc phosphate, talc, mica, clay, potassium feldspar, calcium carbonate, kaolin, alumina white, white carbon, aluminum hydroxide, magnesium carbonate, barium carbonate, barium sulfate (e.g., precipitated barium sulfate), calcium sulfate (e.g., calcined gypsum), and zinc sulfide; and color pigments such as Bengala (red iron oxide), titanium white (titanium oxide), yellow iron oxide, carbon black, naphthol red, and phthalocyanine blue.

When the antifouling coating composition to be used in the present invention contains a pigment (D), the content thereof can be appropriately controlled depending on, e.g., the purpose and type of component. For example, the content is preferably 1 to 40 mass% relative to 100 mass% of the solid content of the composition.

### <(E) Monocarboxylic Acid Compound>

The antifouling coating composition to be used in the present invention can contain a monocarboxylic acid compound (E) and/or a metal salt thereof for the purpose of improving the renewability of an antifouling coating film to be formed from the surface in water, promoting the improvement of the antifouling property by facilitating the release of an antifouling agent (C) into water when the antifouling coating film contains the antifouling agent (C), and further imparting appropriate water resistance to the antifouling coating film. As the monocarboxylic acid compound (E) and/or a metal salt thereof, monocarboxylic acid compounds may be used singly, or in combination of two or more.

Examples of the monocarboxylic acid compound (E) include versatic acid, palmitic acid, stearic acid, isostearic acid, rosin, naphthenic acid, and salicylic acid. As the monocarboxylic acid compound (E), monocarboxylic acid compounds may be used singly or in combination of two or more. For example, versatic acid and rosin are preferred as the monocarboxylic acid compound (E) .

The monocarboxylic acid (E) may form a metal salt (for example, a copper ester). The metal salt may be formed in advance before the underwater-use antifouling coating composition is produced, or may be formed through a reaction with another coating component during the production of the underwater-use antifouling coating composition.

Note that the versatic acid is a mixture containing an alkyl carboxylic acid having a branched chain and containing carbon atoms of 5 to 15, mainly 9 to 11 and particularly 10. Rosin (rosins such as gum rosin, wood rosin and tall oil rosin, and rosin derivatives such as hydrogenated rosin and disproportionated rosin) is a mixture of abietic acid having three ring structures containing a conjugated double bond and a carboxy group, and its isomers. For example, naphthenic acid and salicylic acid are also compounds having a ring structure and a carboxyl group.

When the antifouling coating composition to be used in the present invention contains a monocarboxylic acid compound (E) and/or a metal salt thereof, the content thereof can be appropriately controlled in consideration of, e.g., the effect of the present invention depending on, e.g., the type and properties of the component. The content is preferably 0.1 mass% or more, more preferably 0.2 mass% or more, and is preferably 10 mass% or less, more preferably 7 mass% or less, relative to 100 mass% of the solid content of the composition.

### <(F) Plasticizer>

The antifouling coating composition to be used in the present invention may contain a plasticizer (F) for the purpose of, for example, imparting plasticity to the antifouling coating film to be formed. As the plasticizer (F), plasticizers may be used singly or in combination of two or more types.

Examples of the plasticizer (F) include paraffinic plasticizers such as chlorinated paraffin and n-paraffin, phosphoric acid ester-based plasticizers such as tricresyl phosphate (TCP), phthalic acid ester-based plasticizers such as dioctyl phthalate (DOP) and diisodecyl phthalate (DIDP), adipic acid-based plasticizers such as dioctyl adipate (DOP), and citric acid-based plasticizers such as tributyl acetylcitrate.

When the antifouling coating composition to be used in the present invention contains a plasticizer (F), the content thereof is preferably 0.1 mass% or more, more preferably 0.5 mass% or more, and preferably 20 mass% or less, more preferably 10 mass % or less relative to 100 mass% of the solid content of the composition because the plasticity of the antifouling coating film can be satisfactorily maintained.

### <(G) Antifoaming Agent>

The antifouling coating composition to be used in the present invention can contain an antifoaming agent (surface conditioner, leveling agent) (G) for forming a smooth coating film. As the defoaming agent (G), defoaming agents may be used singly, or in combination of two or more.

As the defoaming agent (G), a commercially available defoaming agent such as a silicone-based defoaming agent, a fluorine-based defoaming agent, or a polymer-based defoaming agent can be used without limitation. Examples thereof include "BYK-066N" (silicone based antifoaming agent manufactured by BYK Japan KK, "BYK-350" (surface conditioner, acrylic copolymer manufactured by BYK Japan KK), and "BYK-354" (antifoaming agent, acrylic polymer manufactured by BYK Japan KK).

When the antifouling coating composition to be used in the present invention contains an antifoaming agent (G), the content thereof can be appropriately controlled depending on, e.g., the purpose and type of component. For example, the content is, preferably 0.01 mass% or more, more preferably 0.05 mass% or more, and is preferably 3 mass% or less, more preferably 1 mass% or less relative to 100 mass% of the solid content of the composition.

### <(H) Anti-sagging Agent/anti-settling Agent>

The antifouling coating composition to be used in the present invention may contain an anti-sagging agent/anti-settling agent (H) for, e.g., adjusting the viscosity of the composition. As the anti-sagging agent/anti-settling agent (H), anti-sagging agents/anti-settling agents may be used singly, or in combination of two or more.

Examples of the anti-sagging agent/anti-settling agent (H) include organic-clay based waxes (e.g., stearate of Al, Ca or Zn, a lecithin salt, an alkylsulfonate salt), organic waxes (e.g., polyethylene wax, oxidized polyethylene wax, fatty acid amide wax, hydrogenated castor oil wax), mixtures of organic clay waxes and organic waxes, and synthetic fine silica. Examples of such anti-sagging and anti-settling agent (H) that can be used include commercially available products such as "DISPARLON 305", "DISPARLON 4200-20", "DISPARLON A630-20X", and "DISPARLON 6900-20X" manufactured by Kusumoto Chemicals, Ltd; and "AS-A D-120" manufactured by Itoh Oil Chemicals Co., Ltd.

When the antifouling coating composition to be used in the present invention contains an anti-sagging agent/anti-settling agent (H), the content thereof can be appropriately controlled depending on, e.g., the purpose and type of component. For example, the content is preferably 0.01 mass% or more, more preferably 0.1 mass% or more, and preferably 10 mass% or less, more preferably 3 mass% or less relative to 100 mass% of the solid content of the composition.

### <(I) Binder Component>

The antifouling coating composition to be used in the present invention can contain a binder component (I) except the polymer (B) except the hydrolyzable copolymer (A) later-described for imparting, for example, water resistance, crack resistance, and strength to the antifouling coating film (af) to be formed. As the binder component (I), binder components may be used singly, or in combination of two or more.

Examples of the binder component (I) include polyester polymers, (meth)acrylic (co)polymers, vinyl-based (co)polymers, terpene phenol resins, petroleum resins, and ketone resins. Of them, a polyester polymer, a (meth)acrylic (co)polymer, a vinyl (co)polymers, and a petroleum resin are preferable, and a polyester polymer and a petroleum resin are more preferable.

When the antifouling coating composition to be used in the present invention contains a binder component (I), the content thereof can be appropriately controlled depending on, e.g., the purpose and type of component. For example, the content is preferably 0.1 to 40 mass% relative to 100 mass% of the solid content of the composition.

### <(J) Solvent>

The antifouling coating composition to be used in the present invention can contain a solvent (J) such as water or an organic solvent for, e.g., controlling the viscosity of the composition. Note that, the antifouling coating composition to be used in the present invention can be prepared using a liquid containing the hydrolyzable copolymer (A) obtained in synthesizing the hydrolyzable copolymer (A). In this case, e.g., a solvent contained in the liquid, and a solvent separately added in mixing the hydrolyzable copolymer (A) and optional components to be added if necessary, correspond to the solvent (J). As the solvent (J), solvents may be used singly, or in combination of two or more. As the solvent (J), an organic solvent is preferable.

Examples of the organic solvent (J) include aromatic organic solvents such as xylene, toluene, and ethylbenzene; ketones such as methyl ethyl ketone, methyl isobutyl ketone, and cyclohexanone; monovalent aliphatic alcohols (the number of carbon atoms: 1 to 10, preferably about 2 to 5) such as ethanol, isopropyl alcohol, n-butanol, isobutanol, and propylene glycol monomethyl ether; and ester solvents such as ethyl acetate and butyl acetate.

When the antifouling coating composition to be used in the present invention contains a solvent (J), the content thereof can be appropriately controlled depending on, e.g., the purpose and type of component. For example, the content is preferably 0 to 50 mass% relative to 100 mass% of the composition.

### <Method for Preparing Antifouling Coating Composition>

The antifouling coating composition to be used in the present invention can be prepared using the component (A) and, if necessary, the components (C) to (J) and other optional components by means of the same apparatus, method, conditions and others as used for preparing common antifouling coating compositions. Specifically, the composition can be prepared by synthesizing the hydrolyzable copolymer (A), then adding (a solution of) the obtained hydrolyzable copolymer (A) and, if necessary, the components (C) to (J) and other optional components simultaneously or sequentially to a container, followed by stirring and mixing them.

The thickness of the antifouling coating film (af) is not particularly limited, and can be controlled depending on, e.g., the antifouling coating composition to be used for forming the antifouling coating film (af), and the embodiment and use of the laminated antifouling coating film of the present invention. For example, the thickness can be set to fall within a range of 10 to 2,000 um, preferably 100 to 500 µm for imparting sufficient strength and antifouling performance to the laminated antifouling coating film.

### [(pa) Pressure-sensitive Adhesive Layer]

The pressure-sensitive adhesive layer (pa) in the present invention is not particularly limited as long as it can cover the water-contact structure with the laminated antifouling coating film via the pressure-sensitive adhesive layer, and can be formed using various pressure-sensitive adhesives. The pressure-sensitive adhesive layer (pa) can be preferably bonded to various types of surfaces formed of, e.g., woods, metals, and organic polymer materials.

Examples of the pressure-sensitive adhesive include acrylic pressure-sensitive adhesives, silicone pressure-sensitive adhesives, natural or synthetic rubber-based pressure-sensitive adhesives, polyurethane pressure-sensitive adhesives, vinyl alkyl ether pressure-sensitive adhesives, polyester pressure-sensitive adhesives, polyamide pressure-sensitive adhesives, poly (α-olefin) and styrene block copolymer-based pressure-sensitive adhesives. These may be used in combination. Of them, an acrylic pressure-sensitive adhesive is preferable because adhesive force thereof is easily designed, excellent in weather resistance and heat resistance. Also a silicone pressure-sensitive adhesive is preferable since it can be used in a wide temperature range and has excellent water resistance and chemical resistance.

Pressure-sensitive adhesives generally have a storage modulus (E') of less than 3 × 10⁶ dynes/cm at a frequency of 1 Hz when dynamic viscoelasticity was measured at normal temperature (23°C).

The pressure-sensitive adhesive may be any one of organic solvent based, aqueous emulsion, hot melt, thermosetting adhesive, and ultraviolet curable pressure-sensitive adhesives.

The acrylic pressure-sensitive adhesive contains an acrylic polymer containing at least 50 mass% of a constitutional unit derived from one or more low-Tg (meth)acrylate ester monomers of all the constitutional units, in an amount of at least 20 mass% in the adhesive. Such acrylic polymers can be produced by free radical polymerization techniques, such as solution polymerization, bulk polymerization, or emulsion polymerization, and may be any one of polymers such as random copolymers, block copolymers, or graft polymers. The low Tg (meth)acrylate monomer refers to a monomer whose homopolymer has a Tg (glass transition point) of 0°C or less. The acrylic pressure-sensitive adhesive may further contain a constitutional unit derived from a polar monomer. Examples of representative polar monomers include acid functional monomers (for example, acrylic acid and methacrylic acid), hydroxyl functional (meth)acrylate) monomers, nitrogencontaining monomers (e.g., acrylamides), and combinations of these. In some embodiments, the acrylic pressure-sensitive adhesive includes at least 0.5, 1, 2, or 3 mass %, and typically 10 mass % or less, of constitutional units derived from polar monomers such as acrylamide and/or acid functional monomers such as (meth)acrylic acid.

The silicone pressure-sensitive adhesive contains at least 20 mass% of silicone in the adhesive. Examples of the silicone pressure-sensitive adhesive that can be used include an addition-type silicone-based pressure-sensitive adhesive, a peroxide-curable silicone-based pressure-sensitive adhesive and a condensed silicone-based pressure-sensitive adhesive. These may be used in combination, or a one-component type or a multi-component type may be used.

The addition-type silicone pressure-sensitive adhesive is generally a pressure-sensitive adhesive producing a silicone polymer by an addition reaction (hydrosilylation reaction) of an organopolysiloxane having a silicon atom and an alkenyl group, such as a vinyl group, and an organopolysiloxane having a hydrosilyl group using a platinum compound catalyst such as chloroplatinic acid. Examples of the addition-type silicone pressure-sensitive adhesive commercially available include "KR-3700" and "X-40-3291-1" manufactured by Shin-Etsu Chemical Co., Ltd. and "Dow Corning Toray SD 4592 PSA" (vinyl group-containing silicone)/"BY 24-742" (Si-H compound) manufactured by Dow Corning Toray Co., Ltd. The addition-type silicone pressure-sensitive adhesive preferably contains a curing catalyst such as a platinum catalyst. Examples of the platinum catalysts commercially available include trade name "CAT-PL-50T" (manufactured by Shin-Etsu Chemical Co., Ltd) and trade name "DOWSIL NC-25 Catalyst".

The peroxide-curable silicone-based pressure-sensitive adhesive is generally a pressure-sensitive adhesive that cures (crosslinks) organopolysiloxane with a peroxide to produce a silicone-based polymer. Examples of the peroxide-curable silicone-based pressure-sensitive adhesive commercially available include "KR-100" manufactured by Shin-Etsu Chemical Co., Ltd.

The condensed silicone-based pressure-sensitive adhesive is generally a pressure-sensitive adhesive that produces a silicone-based polymer by dehydration or dealcoholization reaction between polyorganosiloxanes having a hydrolyzable silyl group such as a silanol group or an alkoxysilyl group at a terminal. These silicone-based polymers may have a linear, branched, or cyclic skeleton, or may be a mixture thereof.

As the pressure-sensitive adhesive layer (pa) using such a pressure-sensitive adhesive, a commercially available substrate-less tape may be used. Examples thereof include a substrate-less silicone tape "NSD-100" manufactured by NIPPA CO., LTD.

The pressure-sensitive adhesive may further contain one or more suitable additives, if necessary. Examples of the additives include a crosslinking agent (e.g., a multifunctional (meth)acrylate crosslinker (e.g., HDDA, TMPTA), an epoxy crosslinker, an isocyanate crosslinker, a melamine crosslinker, an aziridine crosslinker), a tackifier (e.g., a phenol-modified terpene, a rosin ester (e.g., a glycerol ester of rosin, a pentaerythritol ester of rosin), C5 and C9 hydrocarbon tackifiers), a thickener, a plasticizer, a filler, an antioxidant, an ultraviolet absorber, an antistatic agent, a surfactant, a leveling agent, a colorant, a flame retardant, and a silane coupling agent.

The pressure-sensitive adhesive layer (pa) may be a continuous layer or may be partially or wholly structured. Examples of the structured pressure-sensitive adhesive layer (pa) include a pressure-sensitive adhesive layer having a channel or a channel-like structure network for passing air therethrough, and a pressure-sensitive adhesive layer that can be rearranged by embossing.

The thickness of the pressure-sensitive adhesive layer (pa) is not particularly limited, but is preferably 1 to 1000 µm, more preferably 5 to 600 µm for obtaining excellent adhesiveness. The thickness of the pressure-sensitive adhesive layer (pa) is preferably thicker when stronger adhesiveness is required or when the surface to be bonded is extremely rough, whereas the thickness thereof is preferably thin if the smoothness of an object is important such as a case where the laminated antifouling coating film itself is preferably not thick.

### [Optional Layer]

The laminated antifouling coating film of the present invention may have an optional layer other than the antifouling coating film (af) and the pressure-sensitive adhesive layer (pa), for example, at least one selected from the group consisting of a base substrate layer (bs), a connected layer (cn) and a release layer (rl). These optional layers constituting a structure may be provided in any order, and each of the layers may consist of the same or different multiple layers. For example, two or more optional layers may be laminated with the antifouling coating film (af) or the pressure-sensitive adhesive layer (pa) interposed between them. For example, a laminated structure of a pressure-sensitive adhesive layer (pa)-a base substrate layer (bs)-a pressure-sensitive adhesive layer (pa)-a connected layer (cn)-an antifouling coating film (af) may be mentioned. Alternatively, a single optional layer may have two or more of the functions that the above layers have. For example, a coating film of an epoxy primer can be used as not only a connected layer (cn) but also a base substrate layer (bs). In the specification, if an optional layer is present between the antifouling coating (af) and the pressure-sensitive adhesive layer (pa), the optional layer may be sometimes referred to as an "middle layer (md)".

Each layer may be provided only in a part of an adjacent layer. Each layer may be constituted of two or more different layers. Examples of the constitution include a case where the pressure-sensitive adhesive layer (pa) having a strong adhesive force is formed only at the sheet edge portion where peeling is likely to occur and the pressure-sensitive adhesive layer (pa) having a weak adhesive force is formed in the portion except the edge portion. If so, the cost can be reduced.

The color of a layer optionally employed may not be limited. However, a color different from those of other layers and objects, or a highly visible color such as a metallic tone or a fluorescent color is advantageous because when other layers disappear due to damage or consumption, the loss of the layers can be easily identified. In addition, an optional layer may be a layer that can be identified based on the reflection of predetermined light when irradiated with ultraviolet light or infrared light.

### [(bs) Base Substrate Layer]

The base substrate layer (bs) is a layer that the laminated antifouling coating film of the present invention preferably has because it has a function to enhance the strength of the laminated antifouling coating film of the present invention.

The base substrate layer (bs) is not particularly limited as long as it has the above-described function. Examples of the base substrate layer include a coating film, a film, and a sheet formed of a material such as a resin, a metal, paper, a nonwoven fabric, a cloth, and glass, or a composite material of these.

A base substrate layer (bs) containing a layer made of a resin is advantageous in the following points: a deformed shape returns to its original shape; easy to cut; excellent adhesion to, e.g., an antifouling coating film (af), a pressure-sensitive adhesive layer (pa), and a connected layer (cn) described later; water immersion can be prevented when the layer is applied to a submerged portion; and not easy to tear and easy to peel off when removed after use.

Examples of the resin material for the base substrate layer (bs) include silicone resins; (co)polymers of an unsaturated monomer such as an acrylic resin, a polyvinyl chloride resin, a polystyrene resin, a polyethylene resin, and a polypropylene resin; polyester resins such as polyethylene terephthalate, polybutylene terephthalate, and polyethylene naphthalate; polyurethane resins; epoxy resins; polyacetals; polycarbonates; acetyl cellulose; and composites of these. Of these resins, polyvinyl chloride is preferable since it is excellent in strength, processability, and economic efficiency.

The base substrate layer (bs) containing a layer made of a metal is advantageous in the following points: a strong sheet can be obtained even if the layer is thin; it is easy to prevent breakage of a coating film by excessive bending during, e.g., production, transportation and construction; excellent adhesion to, e.g., a coating film or a pressure-sensitive adhesive layer (pa); water immersion can be prevented when the layer is applied to a submerged portion, not easy to tear and easy to peel off when removed after use; and a decrease in antifouling property can be avoided even when the antifouling coating film (af) is excessively consumed (a certain antifouling effect can be obtained even by the base substrate layer (bs) itself, which appears after consumption).

Examples of the metal material for the base substrate layer (bs) include metals composed of one or more metal elements selected from the group consisting of iron, aluminum, titanium, and copper.

When iron is used as a constituent element, a metal material that suppresses rusting, such as an alloy with chromium, i.e., stainless steel, and tinplate (surfaceplated steel), may be used in accordance with the application. Use of such a metal is effective in the following points: peel-off caused by rusting can be prevented under a water-susceptible environment. Examples of the stainless steel include ferritic stainless steel such as SUS430 (containing about 17% of chromium, being inexpensive and excellent in corrosion resistance, and also having magnetic property), austenitic stainless steels such as SUS304 (containing about 18% of chromium and about 8% of nickel, having excellent resistance to high temperature/low temperature changes, and having no magnetic property), and SUS316 (containing about 17% of chromium, about 12% of nickel, and about 2.5% of molybdenum, and being excellent in corrosion resistance in a chloride environment); and a martensitic stainless steels such as SUS410. These can be used without limitation and can be appropriately selected according to the usage environment, cost, and method of use. In the case of use in contact with water, it is preferable to use aluminum and titanium other than stainless steel and tinplate as described above since they have corrosion resistance.

Examples of the paper material for use in the base substrate layer (bs) include non-coated printing paper such as high-quality paper and medium-quality paper, and coated paper such as art paper and coat paper. Paper called Japanese paper and tissue paper may be included.

The base substrate layer (bs) is preferably used in combination with nonwoven fabrics because it is easy to cut during production or processing, and it is difficult to tear when peeled off and removed after use. Examples of such nonwoven fabrics include those made of, e.g., polyethylene, polypropylene, polyester, rayon and glass. The strength and cutting property by hand can be controlled by the thickness and density of the fiber in accordance with the application. Examples of the cases of using such a base substrate layer are disclosed in, e.g., WO2015/98983 A and WO2018/117264 A.

The base substrate layer (bs) may have a barrier function for reducing movement of water or other liquid substances. Examples of such a base substrate layer (bs) are those disclosed as a water-vapor barrier layer in JP 2015-224334 A.

The base substrate layer (bs) may have fine concave-convex structures on a part or the whole of the surface, if necessary. Such a fine concave-convex structure is formed by a method such as surface polishing with, e.g., sandpaper, blast treatment, or embossing. If the base substrate layer (bs) has such a fine concave-convex structure, the base substrate layer (bs) exhibits excellent adhesion to the antifouling coating film (af) in contact with the concave-convex surface and to a connected layer (cn) described later.

The surface of the base substrate layer (bs) may be partially or wholly treated, if necessary. Examples of such a surface treatment include a corona treatment and an etching treatment.

The thickness of the base substrate layer (bs) is not particularly limited, and can be controlled according to, e.g., the material for the base substrate layer (bs) to be employed, and the embodiment and application of the laminated antifouling coating film of the present invention. The thickness, for example, falls within the range of 5 to 1,000 µm, preferably in a range of 10 to 100 µm.

### [(cn) Connected Layer]

The connected layer (cn) is a layer that the laminated antifouling coating film of the present invention preferably has since it has a function to increase the bonding strength between layers contained in the laminated antifouling coating film of the present invention.

The connected layer (cn) is not particularly limited as long as it has the function described above. Examples thereof include layers prepared by drying and curing epoxy resin-based tie coats or primers as described in JP H10-259351 A or WO2017/146193 A, and other commercially available vinyl binders or primers.

The connected layer (cn) may further have a barrier function to reduce movement of water or other liquid substances. Examples of such a connected layer (cn) include commercially available corrosion-resistant coating materials and those described as a water-vapor barrier layer in JP 2015-224334 A.

According to an embodiment of the present invention, a test coating film sheet may have a layer having both functions of the base substrate layer (bs) and the connected layer (cn).

In such an embodiment, when the base substrate layer (bs) or the connected layer (cn) contains a polymer (B) except the hydrolyzable polymer (A), examples of the polymer (B) include a polyurethane resin; epoxy resin; polyacetal; polycarbonate; acetyl cellulose; and composites of these. It is preferable that either an epoxy resin or a urethane resin is contained and more preferable that an epoxy resin is contained.

For example, the middle layer (md) containing an epoxy resin, more specifically, a film of an epoxy primer, can be laminated between the antifouling coating film (af) and the pressure-sensitive adhesive layer (pa) as a layer having both functions of the base substrate layer (bs) and the connected layer (cn).

The thickness of the connected layer (cn) is not particularly limited, and can be controlled depending on, e.g., the resin contained in the connected layer (cn) to be used, the embodiment and application of the laminated antifouling coating film of the present invention. The thickness falls, for example, within the range of 10 to 400 µm, preferably in the range of 20 to 200 µm.

### [(rl) Release Layer]

The release layer (rl) is a layer which is brought into contact with the antifouling coating film (af) and/or the pressure-sensitive adhesive layer (pa) and peeled off when the laminated antifouling coating film is used. The release layer (rl) is a layer that the laminated coating film of the present invention preferably has for the reasons that the layer protects the antifouling coating film (af) and/or the pressure-sensitive adhesive layer (pa) to ensure workability of attachment and adhesive property until use.

The release layer (rl) is typically a layer including a release liner made of paper or film coated or modified with a low surface-energy compound such as an organosilicone compound, fluoropolymer, fluorosilicone, polyurethane or polyolefin. The release liner may be a polymer sheet made from polyethylene, polypropylene, PVC, or polyester containing or not containing a compound repelling the adhesive of the pressure-sensitive adhesive layer (pa).

As the release layer (rl), it is preferable to select a layer having an appropriate delamination load relative to the antifouling coating film (af) and/or the pressure-sensitive adhesive layer (pa).

The release liner may have a micro-structured or micro-embossed pattern for imparting a predetermined concave-convex structure to the antifouling coating film (af) and/or the pressure-sensitive adhesive layer (pa). For example, the release layer (rl) may have a release liner having a template structure for imparting the "riblet surface structure" as described above to the surface of the antifouling coating film (af) in contact with the release layer.

As the release liner, a liner easily removed when immersed in water may be used as disclosed, for example, in WO 2020/105630 A.

The thickness of the release layer (rl) is not particularly limited, and can be controlled according to, e.g., the material of the release layer (rl) to be used, and the embodiment and application of the laminated antifouling coating film of the present invention. The thickness falls, for example, within the range of 5 to 200 µm, preferably in the range of 10 to 100 µm.

### - Method for Producing Laminated Antifouling Coating film -

The laminated antifouling coating film of the present invention can be produced by laminating an antifouling coating film (af), a pressure-sensitive adhesive layer (pa), and other optional layers by use of a method known in the art.

The antifouling coating film (af) can be formed in the same manner as in forming an antifouling coating film from antifouling coating composition containing a hydrolyzable copolymer known in the art, for example, by applying the antifouling coating composition to an object by, e.g., spraying, brush, roller, film applicator, flow coater, roll coater, or electrodeposition coating, or impregnating an object with an antifouling coating composition, and thereafter drying the antifouling coating film under conditions suitable for the antifouling coating composition employed. The object on which the antifouling coating film (af) is to be laminated varies depending on the embodiment of the laminated antifouling coating film of the present invention. Example of the object onto which the antifouling coating film (af) is to be laminated include a pressure-sensitive adhesive layer (pa) formed in advance, a base substrate layer (bs) or a connected layer (cn) as a middle layer (md), and a release layer (rl).

The pressure-sensitive adhesive layer (pa) can be formed in the same manner as in forming the pressure-sensitive adhesive layer from a pressure-sensitive adhesive known in the art, for example, by roller coating (such as gravure), flow coating, dip coating, spin coating, spray coating, knife coating, die coating (such as rotary or slit), extrusion coating (such as hot melt), or printing. The object on which the pressure-sensitive adhesive layer (pa) is to be laminated also varies depending on the embodiment of the laminated antifouling coating film of the present invention. Examples of the object on which the pressure-sensitive adhesive layer (pa) is to be laminated include an antifouling coating film (af) formed in advance, a base substrate layer (bs) or a connected layer (cn) as a middle layer (md), and a release layer (rl).

When the base substrate layer (bs) and the connected layer (cn) are formed as the middle layer (md), these layers can be formed in the same manner as in the antifouling coating film (af) and the pressure-sensitive adhesive layer (pa), for example, by roller coating (such as gravure), flow coating, dip coating, spin coating, spray coating, knife coating, die coating (such as rotary or slit), extrusion coating (such as hot melt), extrusion molding, or printing.

### -Water-contact Structure with Laminated Antifouling Coating film-

The water-contact structure with a laminated antifouling coating film of the present invention has a water-contact structure and the laminated antifouling coating film of the present invention.

The water-contact structure is not particularly limited as long as the laminated antifouling coating film of the present invention can form on it and can exhibit a function. Examples of the water-contact structure include substrates whole or at least part of which is constantly or temporarily submerged, in water, preferably sea water. Examples thereof include ships (e.g., a hull outer plate of a large steel ship such as a container ship, a tanker, or a bulker, a fishing ship, an FRP ship, a wooden ship, or a yacht, newly built ships and repair ships are included); fishery or other marine materials (e.g., rope, fishing net, fishing gear, float, buoy, diver suit, underwater glasses, oxygen bottle, swimming suit, torpedo); and underwater structures (e.g., structures such as oil pipelines, water conduits, circulating water pipes, and water supply/discharge ports of thermal and nuclear power plants; submarine cables, sea water utilization equipment (water pumps and the like), megafloats, coastal roads, submarine tunnels, harbor facilities, and structures for various underwater civil engineering structures, such as canals and water channels). In consideration of the effect of the present invention, the water-contact structure is preferably a moving body which is required to have high antifouling property and periodical repairment such as top coating, for example, a ship (including newly built or ship in operation) such as a container ship, a tanker, or a bulker.

The water-contact structure may be a water-contact structure treated with an antirust agent or another treatment agent; or a water-contact structure on the surface of which a coating film (non-antifouling coating film) except an antifouling coating film, such as a rust preventive coating film (e.g., zinc rich paint), an corrosion-resistant coating film (e.g., an epoxy-based heavy-duty corrosion-resistant paint), or a binder coating film, is formed; or the laminated antifouling coating film of the present invention deteriorated or consumed or an antifouling coating film (old antifouling coating film) formed from another antifouling coating composition, is formed. In the water-contact structure provided with a laminated antifouling coating film of the present invention, the laminated antifouling coating film is not necessary to be formed directly in contact with the surface of the water-contact structure, and may be formed on the water-contact structure via, e.g., a treatment agent or another coating film. Therefore, the water-contact structure provided with a laminated antifouling coating film of the present invention may further contain, e.g., other treatment agents and coating films in addition to the water-contact structure and the laminated antifouling coating film of the present invention. The laminated antifouling coating film of the present invention can be formed on, e.g., various types of non-antifouling coating films, and deteriorated antifouling coating films.

The "non-antifouling coating film" that the water-contact structure has refers to a coating film except the antifouling coating films, such as an undercoat coating film or an intermediate coating film, which is formed in advance on the surface of the water-contact structure and varies depending on the type and application of the substrate before the laminated antifouling coating film of the present invention is formed. The type of non-antifouling coating film is not particularly limited. Examples of the non-antifouling coating film include an antirust coating film formed from an antirust coating material, a corrosion-resistant coating film formed from a corrosion-resistant coating material, and a binder coating film formed from a binder coating material. Examples of the corrosion-resistant coating film include those each formed from a corrosion-resistant coating material containing an epoxy-based resin. Examples of the binder coating film include those each formed from a binder coating material containing one or two or more resins such as an epoxy resin, a vinyl resin, and a (meth)acrylic resin. Note that, when applied to a water-contact structure such as a ship, since an anticorrosion coating film (undercoat coating film) and a binder coating film (intermediate coating film) are not clearly distinguished and a coating film having both functions is sometimes used. The "non-antifouling coating film" may be a binder coating film also having such a function as an anticorrosion coating film.

In the water-contact structure, the portion to be covered with the laminated antifouling coating film of the present invention is not particularly limited, and can be appropriately selected in accordance with the application. For example, when the water-contact structure is a ship, a constantly submerged part or a dry-wet alternating part which are constantly exposed to a biological fouling environment can be specified as the part (part of the substrate) on which the antifouling coating film of the present invention is to be formed. Note that, when the water-contact structure is a ship, the antifouling coating film of the present invention can be formed on not only the ship bottom (constantly submerged part) but also the entire portion on which a general antifouling coating film is to be formed including the water line portion (dry-wet alternating part).

The "old antifouling coating film" that the contact water structure has refers to an antifouling coating film, which has been used in contact with water (sea water) for a certain period of time (for example, the service life of the antifouling coating film) and which is deteriorated, altered, or consumed compared to an intact antifouling coating film before use (before immersion in sea water). The degree of deterioration, alteration, or consumption of the antifouling coating film is not particularly limited. The degree of the film is acceptable as long as coating with the laminated antifouling coating film of the present invention is needed or preferred. The type of old antifouling coating film is not particularly limited. The laminated antifouling coating film of the present invention or other antifouling coating films are acceptable. Examples of the antifouling coating film include a film that is decomposed by hydrolysis (for example, a coating film formed from a silyl ester resin-based antifouling coating material) and a film that is decomposed by hydration (for example, a coating film formed from a vinyl chloride-isobutyl vinyl ether resin-based antifouling coating material).

### - Method for Producing water-contact Structure Provided with Laminated Antifouling Coating film -

The method for producing a water-contact structure provided with a laminated antifouling coating film of the present invention includes a step of attaching the laminated antifouling coating film of the present invention to a water-contact structure (in the specification, it is referred to as an "attaching step"). For example, the laminated antifouling coating film can be attached to the water-contact structure by applying a force to the pressure-sensitive adhesive layer (pa) from the side of the antifouling coating film (af) by use of, **e.g.,** a rubber roller to pressure-bond the pressure-sensitive adhesive layer (pa) to the water-contact structure. When the release layer (rl) is laminated on the pressure-sensitive adhesive layer (pa) in contact with the pressure-sensitive adhesive layer (pa), the release layer (rl) is removed in the attaching step. When the release layer (rl) is laminated on the antifouling coating film (af) in contact with the antifouling coating film (af), the release layer (rl) can be removed after the attaching step (after the pressure bonding as described above is completed).

The method for producing a water-contact structure provided with a laminated antifouling coating film of the present invention may include steps other than the attaching step. For example, it is preferable that the method for producing a water-contact structure provided with a laminated antifouling coating film of the present invention further includes, for the purpose of suppressing peeling of the laminated antifouling coating film from the water-contact structure, a step of connecting the surface edge portion and the periphery thereof by sealing with attachment of one laminated antifouling coating film over another laminated antifouling coating film, or a step of connecting the surface edge portion of the laminated antifouling coating film and the periphery thereof by sealing with a coating composition.

In addition, before or after the attacing step, a groove or a recess may be formed in the whole or a part of a site where the edge portion of the test coating film sheet to be attached is present. Due to the presence of the groove or recess, the edge portion sinks lower than the periphery, and thus peel-off of the laminated antifouling coating film of the present invention can be prevented. The depth of the groove or the recess is not particularly limited, but is preferably equal to or more than the thickness of the sheet, and less than the film thickness of the object to be attached, for example, the old antifouling coating film layer of the water-contact structure. Furthermore, when the formation of a groove or recess and sealing mentioned above are employed in combination, a peel-off preventive effect can be enhanced. When a groove or recess is formed before the attaching step, the groove or recess can be used as a mark or a guide for confirming the position to be attached with an object. The groove and recess can be formed by cutting with, for example, a knife, an engraving knife or a power tool.

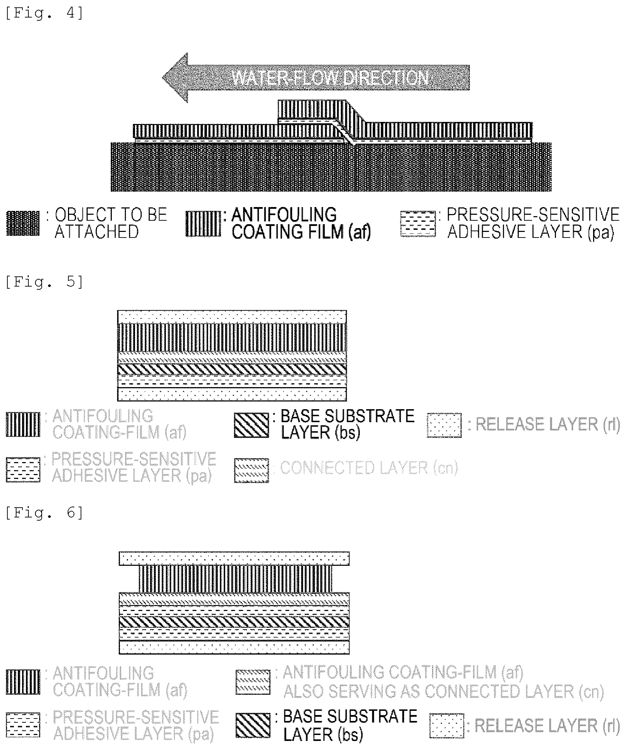

In an embodiment of the present invention, with regard to the step of connecting the surface edge portion and the periphery thereof by sealing with attachment of one laminated antifouling coating film over another laminated antifouling coating film, the method for producing a water-contact structure provided with a laminated antifouling coating film further includes a step of applying a new laminated antifouling coating film (in the specification, referred to as a "second laminated antifouling coating film") to the boundary between the region (X) where the laminated antifouling coating film (in the specification, referred to as a "first laminated antifouling coating film") formed by the attaching step is applied and the region (Y) where the first laminated antifouling coating film is not applied so as to cover at least a part of each of the regions (X) and (Y) with the second laminated antifouling coating film. More specifically, as shown in Fig. 4, in consideration of the direction of the water flow when the water-contact structure moves, provided that the region at the downstream side (for example, the stern side) is designated as region (X), and the region at the upstream side (for example, the bow side) is designated as region (Y), attachment of the second laminated antifouling coating film is started from the (Y) region so as to cover the edge of the first laminated antifouling coating film in the region (X) with the second laminated antifouling coating film (the first laminated antifouling coating film is placed under the second laminated antifouling coating film). The embodiment is preferable when a plurality of laminated antifouling coating films (sheets) are placed side by side and attached to the water-contact structure, because peel-off can be prevented while reducing the number of steps of sealing the edge portion.

It is also preferable to expose another layer only at the edge portion of the surface having the antifouling coating film (af). When the base substrate layer (bs) and the connected layer (cn) are more adhesive to the coating composition for use in a sealing treatment than the antifouling coating film (af), if these layers at the edge portion are expose, sealing can be made more strongly. This case is advantageous in that the range to be subjected to the sealing treatment can be apparent when the sealing treatment is performed.

On the other hand, the step of connecting the surface edge portion of the laminated antifouling coating film and the periphery thereof by sealing with a coating composition is preferable because workability and adhesion are excellent. Examples of the coating composition for use in such a sealing treatment include, but not particularly limited to, the coating compositions described above in connection with the "connected layer (cn)" and the "middle layer (md)", and the coating compositions for the "binder coating film" described above in connection with the "non-antifouling coating film" that the water-contact structure has. However, a thermosetting coating composition such as an epoxy resin-based coating composition is more preferably used for obtaining strong adhesion. In such a sealing treatment, two or more coating compositions may be applied one after another. For example, it is preferable that the coating composition mentioned as the coating composition for the connected layer (cn) is applied as a first layer (lower layer) and the antifouling coating composition containing a hydrolyzable copolymer (A) is applied onto the first layer as a second layer.

When the sealing treatment is performed, a release layer (rl) is preferably provided on the antifouling layer (af) in order to prevent the coating composition to be used for the sealing treatment from attaching to the antifouling layer (af). In this case, the release layer (rl) is preferably fixed with an easy-to-remove material such as a masking tape.

The laminated antifouling coating film of the present invention is typically used for producing a water-contact structure provided with a laminated antifouling coating film as described above. The purpose in this case is to impart predetermined antifouling performance to the water-contact structure. However, the use of the laminated antifouling coating film of the present invention is not limited to the water-contact structure. The laminated antifouling coating film may be used for not only the aforementioned purpose but also other purposes or for purposes different from the aforementioned purpose. For example, if a pigment to be contained in the antifouling coating composition is appropriately selected, the color tone of the antifouling coating film (af) becomes highly visible. Alternatively, if a laminated antifouling coating film is processed into shapes such as numbers or letter shapes, for example, a draft mark, can be simply displayed on a water-contact structure such as a hull, without impairing antifouling performance.

### - Other Aspects of the Invention -

The laminated antifouling coating film and method for producing the film and the water-contact structure provided with the laminated antifouling coating film and method for producing the film described in the specification can be converted into other inventions based on patent practice and common technical knowledge.

For example, the "method for producing a water-contact structure provided with a laminated antifouling coating film" of the present invention can be converted into "an antifouling method for a water-contact structure" or "a method for covering a water-contact structure" including a step of attaching the laminated antifouling coating film of the present invention to at least a part of a water-contact structure. The "step of attaching a laminated antifouling coating film" in, e.g., the "antifouling method for a water-contact structure" is basically the same as the above step in the "method for producing a water-contact structure provided with a laminated antifouling coating film". In addition, the technical matters described in connection with the "method for producing a water-contact structure provided with a laminated antifouling coating film" in the specification can be appropriately replaced with the technical matters in connection with, e.g., the "antifouling method for a water-contact structure". For example, the "antifouling method for water-contact structure" of the present invention can be replaced with a "method for repairing a deteriorated antifouling coating film-attached water-contact structure" in accordance with an embodiment where a water-contact structure has a deteriorated antifouling coating film.

### Examples

Hereinafter, the present invention will be described more specifically with reference to Examples, but the present invention is not limited by Examples.

The "solid content" of each of the components described in Examples refers to a component obtained by removing a volatile component contained as a solvent in the component. A substance obtained by drying each component in a hot-air dryer at 125°C for 1 hour is regarded as a "solid content". The ratio of the solid content to the mass of each component before dried is calculated. The "Gardner viscosity" described in Examples is a numerical value measured by a Gardner foam viscometer at 25°C.

### [Production Example M1: Production of Metal Ester Group-containing Monomer Mixture (M1)]

A four-necked flask equipped with a condenser, a thermometer, a dripping funnel, and a stirrer was charged with 85.4 parts by mass of PGM (propylene glycol monomethyl ether) and 40.7 parts by mass of zinc oxide. The mixture was raised in temperature to 75°C while stirring. Subsequently, a mixture of 43.1 parts by mass of methacrylic acid, 36.1 parts by mass of acrylic acid, and 5 parts by mass of water was added dropwise from a dripping funnel at a constant rate over 3 hours. After stirring for further 2 hours, 36 parts by mass of PGM was added to obtain a transparent metal ester group-containing monomer mixture M1. The solid content was 44.8 mass%.

### [Production Example M2: Production of Metal Ester Group-containing Monomer Mixture (M2)]

A four-necked flask equipped with a condenser, a thermometer, a dripping funnel, and a stirrer was charged with 60 parts by mass of xylene, 13 parts by mass of PGM, and 40.7 parts by mass of zinc oxide. The mixture was raised in temperature to 75°C while stirring. Subsequently, a mixture of 32.3 parts by mass of methacrylic acid, 27 parts by mass of acrylic acid, 37.7 parts by mass of oleic acid, 2.3 parts by mass of acetic acid and 5.8 parts by mass of propionic acid was added dropwise from a dripping funnel at a constant rate over 3 hours. After stirring for further 2 hours, 77 parts by mass of xylene and 46 parts by mass of PGM were added to obtain a metal ester group-containing monomer mixture M2. The solid content was 39.6%.

### <Binder Production Example 1: Production of Metal Ester Group-Containing Hydrolyzable Copolymer Solution (A-1)>

An autoclave in which pressure polymerization can be performed and which is equipped with a cooler, a thermometer, a dropping tank, and a stirrer was charged with 15 parts by mass of PGM (propylene glycol methyl ether), 60 parts by mass of xylene, and 4 parts by mass of ethyl acrylate. The mixture was pressurized to 350 kPa and heated to 135°C while stirring. Subsequently, from the dropping tank, a transparent mixture constituted of 15 parts by mass of methyl methacrylate, 48 parts by mass of ethyl acrylate, 15 parts by mass of n-butyl acrylate, 40 parts by mass of the metal ester group-containing monomer mixture (M1) obtained in Production Example M1, 10 parts by mass of xylene, 1.2 parts by mass of NOFMER MSD, 3 parts by mass of 2,2'-azobisisobutyronitrile (hereinafter, also referred to as AIBN), and 1 part by mass of 2,2'-azobis(2-methylbutyronitrile) (hereinafter, also referred to as AMBN) was added dropwise at a constant rate over 3 hours. After completion of the dropwise addition, the temperature was lowered to 110°C over 30 minutes. To the mixture, 0.5 parts by mass of t-butyl peroctoate and 7 parts by mass of xylene were added dropwise over 30 minutes. The mixture was further stirred for 1 hour and 30 minutes, and then 8 parts by mass of xylene was added thereto. The obtained solution was filtered through 300-mesh to obtain a light yellow transparent hydrolyzable copolymer solution (A-1) having a heating residue of 45.7%, and a Gardner viscosity +V, without an insoluble matter.

### <Binder Production Example 2: Production of Metal Ester Group-polyorganosiloxane Block-containing Hydrolyzable Copolymer Solution (A-2)>

A four-necked flask equipped with a condenser, a thermometer, a dripping funnel, and a stirrer was charged with 15 parts by mass of n-butanol, 56 parts by mass of xylene, and 4 parts by mass of ethyl acrylate (EA). The mixture was rained in temperature to 100°C while stirring. Subsequently, from the dripping funnel, a transparent mixture constituted of 12.5 parts by mass of n-butyl acrylate (BA), 30.2 parts by mass of methyl methacrylate (MMA), 23.2 parts by mass of ethyl acrylate, 6 parts by mass of 2-methoxyethyl acrylate (2-MEA), and 10 parts by mass of X-22-174ASX (trade name, manufactured by Shin-Etsu Chemical Co., Ltd), corresponding to the polyorganosiloxane block-containing monomer (a 21)), 31.3 parts by mass of the metal ester group-containing monomer mixture M1 obtained in Production Example M1, 10 parts by mass of xylene, 0.8 parts by mass of NOFMER MSD, 1 part by mass of AIBN and 8 parts by mass of AMBN were added dropwise at a constant rate over 6 hours. After completion of the dropwise addition, 2 parts by mass of tert-butyl peroxyoctoate (TBPO) and 7 parts by mass of xylene were added dropwise over 90 minutes. The mixture was further stirred for 60 minutes, and then, 7.5 parts by mass of xylene was added thereto to obtain a colorless and transparent hydrolyzable copolymer solution (A-2) having a solid content of 48.4% and a Gardner viscosity LM.

### <Binder Production Example 3: Production of Metal Ester Group-polyorganosiloxane Block-containing Hydrolyzable Copolymer Solution (A-3)>

A four-necked flask equipped with a condenser, a thermometer, a dripping funnel, and a stirrer was charged with 15 parts by mass of n-butanol, 36 parts by mass of xylene, and 4 parts by mass of ethyl acrylate. The mixture was raised in temperature to 100°C while stirring. Subsequently, from the dripping funnel, a transparent mixture constituted of 7.5 parts by mass of n-butyl acrylate, 21 parts by mass of methyl methacrylate, 30.9 parts by mass of ethyl acrylate, 12.5 parts by mass of cyclohexyl methacrylate (CHMA), 10 parts by mass of X-22-174ASX, 31.3 parts by mass of the metal ester group-containing monomer mixture M1, 0.8 parts by mass of NOFMER MSD, 1 part by mass of AIBN and 10 parts by mass of AMBN was added dropwise at a constant rate over 6 hours. After completion of the dropwise addition, 2 parts by mass of TBPO and 7 parts by mass of xylene were added dropwise over 90 minutes. The mixture was further stirred for 60 minutes and then, 13.5 parts by mass of xylene was added thereto to obtain a colorless and transparent hydrolyzable copolymer solution (A-3) having a solid content of 54.2% and a Gardner viscosity +X.

### <Binder Production Example 4: Production of Metal Ester Group-polyorganosiloxane Block-containing Hydrolyzable Copolymer Solution (A-4)>

A four-necked flask equipped with a condenser, a thermometer, a dripping funnel, and a stirrer was charged with 40 parts by mass of PGM and 31 parts by mass of xylene. The mixture was raised in temperature to 100°C while stirring. Subsequently, using a dropping pump, a transparent mixture constituted of 18 parts by mass of methyl methacrylate, 15 parts by mass of ethyl acrylate, 10 parts by mass of FM-7711 (trade name, manufactured by JNC Corporation), corresponding to polyorganosiloxane block-containing monomer (a22)), 10 parts by mass of FM-7721 (trade name, manufactured by JNC Corporation), 30 parts by mass of FM-0711 (trade name, manufactured by JNC Corporation, corresponding to the polyorganosiloxane block-containing monomer (a21)), 42.5 parts by mass of the metal ester group-containing monomer mixture described in Production Example M2, 10 parts by mass of xylene, 2.5 parts by mass of AIBN, and 4.5 parts by mass of AMBN was added dropwise at a constant rate over 6 hours. After completion of the dropwise addition, 0.5 parts by mass of tert-butyl peroctoate and 10 parts by mass of xylene were added dropwise over 30 minutes, the mixture was further stirred for 1 hour and 30 minutes, and then 5.5 parts by mass of xylene was added to obtain a slightly turbid hydrolyzable copolymer solution (A-4) having a heating residue of 45.6% and a Gardner viscosity-T.

### <Production Example 5: Production of Hydrolyzable Copolymer Solution (A-5)>

A four-necked flask equipped with a condenser, a thermometer, a dripping funnel, and a stirrer was charged with 15 parts by mass of PGM, 65 parts by mass of xylene, and 4 parts by mass of ethyl acrylate. The mixture was raised in temperature to 100°C while stirring. Subsequently, from the dripping funnel, a transparent mixture constituted of 32.3 parts by mass of methyl methacrylate, 13.9 parts by mass of ethyl acrylate, 40 parts by mass of FM-0711, 21.7 parts by mass of the metal ester group-containing monomer mixture (M1) described in Production Example M1, 10 parts by mass of xylene, 1.2 parts by mass of NOFMER MSD, 2.5 parts by mass of AIBN, and 0.8 parts by mass of AMBN was added dropwise at a constant rate over 6 hours. After completion of the dropwise addition, 0.5 parts by mass of tert-butyl peroctoate and 10 parts by mass of xylene were added dropwise over 30 minutes. The mixture was further stirred for 1 hour and 30 minutes, and then 10.1 parts by mass of xylene was added, to obtain a light yellow transparent hydrolyzable copolymer solution (A-5) having a heating residue of 45.1% and a Gardner viscosity +U.

### <Measurement of Number Average Molecular Weight (Mn) and Weight Average Molecular Weight (Mw) of Copolymer>

Mn and Mw of the copolymer contained in each of the obtained hydrolyzable copolymer solutions (A-1) to (A-5) were measured using GPC (gel permeation chromatography) under the following conditions. The results are shown in Table 1.

**[Table 1]**

| | | | Production Example 1 | Production Example 2 | Production Example 3 | Production Example 4 | Production Example 5 |
|---|---|---|---|---|---|---|---|
| | | | (A-1) | (A-2) | (A-3) | (A-4) | (A-5) |
| Monome r | (a11 ) | M1 | 40.0 | 31.3 | 31.3 | | 21.7 |
| | | Numerical value in parentheses is solid content | (17.9) | (14.0) | (14.0) | | (9.7) |
| | | M2 | | | | 42.5 | |
| | | Numerical value in parentheses is solid content | | | | (16.8) | |
| | (a21 ) | X-22-174ASX | | 10.0 | 10.0 | | |
| | | FM-0711 | | | | | 40.0 |
| | (a22 ) | FM-7711 | | | | 10.0 | |
| | | FM-7721 | | | | 10.0 | |
| | (a3) | MMA | 15.0 | 30.2 | 21.0 | 18.0 | 32.3 |
| | | EA | 52.0 | 27.2 | 34.9 | 15.0 | 17.9 |
| | | BA | 15.0 | 12.5 | 7.5 | | |
| | | CHMA | | | 12.5 | | |
| | | 2-MEA | | 6.0 | | | |
| Initiator | | AIBN | 3.0 | 1.0 | 1.0 | 2.5 | 2.5 |
| | | AMBN | 1.0 | 8.0 | 10.0 | 4.5 | 0.8 |
| | | TBPO | 0.5 | 2.0 | 2.0 | 0.5 | 0.5 |
| Chain transfer agent | | NOFMER MSD | 1.2 | 0.8 | 0.8 | | 1.2 |
| physical property value | Solid content of copolymer solution | | 45.2 | 48.4 | 54.2 | 45.6 | 45.1 |
| | Viscosity of copolymer solution | | +V | LM | +X | -T | +U |
| | Mw of copolymer | | 5500 | 4300 | 4200 | 6400 | 8800 |

Apparatus: "HLC-8320GPC" (manufactured by Tosoh Corporation)
Column: "TSKgel G4000HXL*G2000HXL" (manufactured by Tosoh Corporation, size 7.8 mmID × 30 cmL)
Eluent: THF (1 mmol citric acid)
Flow rate: 1.000 ml/min
Detector: RI
Column thermostat temperature: 40°C
Standard substance: polystyrene
Sample preparation method: THF (tetrahydrofuran) containing 1 mmol of citric acid was added to the copolymer solution prepared in each of Production Examples to dilute the copolymer up to a solid content concentration of the copolymer of 0.4 wt%. The resulting filtrate was filtered through a membrane filter to obtain a GPC measurement sample.

The components in Table 1 are as follows.
*1 X-22-174ASX: manufactured by Shin-Etsu Chemical Co., Ltd., single-terminal methacryloyloxyalkyl-modified organopolysiloxane, functional group equivalent: 900 g/mol
*2 FM-7711: manufactured by JNC Corporation, bothterminal methacryloyloxyalkyl-modified organopolysiloxane, average molecular weight Mn = 1,000
*3 FM-7721: manufactured by JNC Corporation, bothterminal methacryloyloxyalkyl-modified organopolysiloxane, average molecular weight Mn = 5,000
*4 FM-0711: Single-terminal methacryloyloxyalkyl-modified organopolysiloxane manufactured by JNC Corporation, average molecular weight Mn = 1,000

Details of each component used in the coating material production examples are shown in Table 2.

**[Table 2]**

| Classification | Name of component | Detail |
|---|---|---|
| (B) Other polymers | Epoxy resin | Manufactured by OHTAKE-MEISHIN CHEMICAL, CO., LTD., "E-001-75X", bisphenol type-A epoxy resin, solid content: 75%, epoxy equivalent: 630 |
| | Vinyl chloride resin | Manufactured by BASF, "Laroflex MP-25", vinyl chloride/vinylisobutyl ether copolymer |
| | Polyamide resin | Manufactured by DIC, "LUCKMIDE TD966", active hydrogen equivalent: 380 g/eq |
| (C) Antifouling agent | Cuprous oxide | Manufactured by American Chemet Corporation, "Red Copp 97N Premium" |
| | Copper pyrithione | Manufactured by Arch UK Biocides Ltd., "Copper Omadine Powder", chemical formula: Cu(-S-C₅H₄N-O-)₂ |
| | Zinc pyrithione | Manufactured by Arch UK Biocides Ltd., "Zinc Omadine Powder", chemical formula: Zn(-S-C₅H₄N-O-)₂ |
| | Medetomidine | Manufactured by I-tech AB, "Selektope", chemical name: (±)-4-[1-(2,3-diemtylphenyl)ethyl]-1H-imidazole |
| | Tralopyril | Manufactured by Janssen PMP, "Econea technical", chemical name: 4-bromo-2-(4-chlorophenyl)-5-(trifluoromethyl)-1H-pyrrol-3-carbonitrile |
| (D) Pigment | Red iron oxide | Manufactured by Morishita Bengala Kogyo Co., Ltd., "Bengala No. 404" |
| | Titanium oxide | Manufactured by SAKAI CHEMICAL INDUSTRY CO., LTD., "TITONE R-5N", Rutile-form titanium oxide, average particle diameter: 0.26 µm, surface treated with alumina |
| | Carbon black | Manufactured by Mitsubishi Chemical Corporation, "Mitsubishi Carbon Black MA100", average particle diameter: 24 nm, nitrogen absorption specific surface: 110 m²/g, pH3.5 |
| | Zinc oxide | Manufactured by HAKUSUI TECH. "Zinc Oxide Type 3", average particle diameter (median diameter): 0.75 µm |
| | Calcium Sulfate | Manufactured by SAN ESU GYPSUM CO., LTD., "AS gypsum" |
| | Precipitated barium sulfate | Manufactured by SAKAI CHEMICAL INDUSTRY CO., LTD., "Precipitated Barium 100" |
| | Baryte powder of barium sulfate | Manufactured by SAKAI CHEMICAL INDUSTRY CO., LTD., "Baryte barium BA" |
| | Mica | Manufactured by Fukuoka Talc Co. Ltd., "Mica powder-325 mesh" |
| | Talc | Manufactured by Takehara Kagaku Kogyo Co., Ltd., "TTK talc" |
| (E) Monocarboxylic acid | Versatic acid | Manufactured by Japan Epoxy Resin Co., Ltd., "Versatic 10", Neodecanoic acid |
| (G) Antifoaming agent | Silicone antifoaming agent | Manufactured by BYK Japan KK, "BYK-066N", solid content: 0.7 mass% |
| (H) Anti-sagging agent/anti-settling agent | Polyethylene oxide | Manufactured by Itoh Oil Chemicals Co., Ltd., "A-S-A D-120" (solid content: 20 mass%) |
| | Amide wax | Manufactured by Kusumoto Chemicals, Ltd., DISPARLON 6900-20X", solid content: 20 mass% |
| (J) Solvent | Xylene | - |
| | PGM | Propylene glycol monomethyl ether |
| | n-Butanol | - |
| | MP | 2-Methoxy-1-propanol |
| | MIBK | Methylisobutyl ketone |
| (AA) Curing accelerator | TAP | Manufactured by Kayaku Akzo Corporation, 2-4-6-tris(dimethylaminomethyl)phenol |
| (BB) Coupling agent | Epoxy silane | Manufactured by Shin-Etsu Chemical Co., Ltd., "KBM-403", 3-glycidylpropyltrimethoxysilane |

### <Preparation of Antifouling Coating Compositions C1 to C7>

Antifouling coating compositions C1 to C7 were prepared by mixing and stirring the components in the amounts (parts by mass) listed in Table 3. Note that the blending amount of each component shown in Table 3 indicates the blending amount in as-is condition. For example, since the blending amount (as a whole) of the fatty acid amide of composition C1 in as-is condition is 1.5 parts by mass and the solid content is 20 mass%, the blending amount of the fatty acid amide *per se* is 0.3 parts by mass.

**[Table 3]**

| | | | Antifouling coating composition | | | | | | |
|---|---|---|---|---|---|---|---|---|---|
| | | | C1 | C2 | C3 | C4 | C5 | C6 | C7 |
| Composition (parts by mass) | (A) | A-1 | 40.0 | | | | | | |
| | | A-2 | | 40.0 | | | 40.0 | | |
| | | A-3 | | | 40.0 | | | | 45.0 |
| | | A-4 | | | | 40.0 | | | |
| | | A-5 | | | | | | 90.0 | |
| | (C) | Cuprous oxide | | | | | 32.0 | | |
| | | Copper pyrithione | 5.0 | | | 5.0 | 2.0 | | 5.0 |
| | | Zinc pyrithione | | | 5.0 | | | | |
| | | Medetomidine | 0.1 | | 0.1 | 0.1 | 0.1 | 0.2 | 0.1 |
| | | Tralopyril | | | 2.5 | | | 0.9 | |
| | (D) | Red iron oxide | 5.0 | 5.0 | 5.0 | 5.0 | 3.0 | 3.0 | |
| | | Titanium oxide | | | | | | | 5.0 |
| | | Zinc oxide | 20.0 | 20.0 | 20.0 | 20.0 | 10.0 | | 20.0 |
| | | Precipitated barium sulfate | 10.0 | 15.0 | 10.0 | 10.0 | | | 10.0 |
| | | Calcium sulfate | 0.5 | 0.5 | 0.5 | 0.5 | 0.5 | | 0.5 |
| | | Talc | 3.0 | 3.0 | 3.0 | 3.0 | 3.0 | | 3.0 |
| | (E) | Versatic acid | 1.0 | 1.0 | 1.0 | 1.0 | | | 1.0 |
| | (G) | BYK-066N | 0.1 | 0.1 | 0.1 | 0.1 | 0.1 | 0.1 | 0.1 |
| | (J) | Xylene | 8.4 | 8.4 | 6.8 | 8.4 | 5.4 | 3.0 | 5.4 |
| | | PGM | 4.9 | 5.0 | 4.0 | 4.9 | 2.4 | 0.8 | 2.9 |
| | (H) | Amide wax | 1.5 | 1.5 | 1.5 | 1.5 | 1.5 | 2.0 | 1.5 |
| | | Polyethylene oxide | 0.5 | 0.5 | 0.5 | 0.5 | | | 0.5 |
| | Total (parts by mass) | | 100.0 | 100.0 | 100.0 | 100.0 | 100.0 | 100.0 | 100.0 |

### <Preparation of Middle-Layer Coating Composition C8>

The components were mixed in the amounts (parts by mass) described in Table 4 and stirred; therefore, a coating composition C8 for a middle layer (md), more specifically, for a connected layer (cn) that may also serve as a base substrate layer (bs) was prepared. When the coating composition is applied, a main agent and a curing agent are mixed and stirred before use.

**[Table 4]**

| | | | Middle-layer coating composition |
|---|---|---|---|
| | | | C8 |
| Main agent | (B) | Epoxy resin | 24.0 |
| | | Vinyl chloride resin | 3.0 |
| | (G) | Xylene | 4.0 |
| | | n-Butanol | 3.0 |
| | | MP | 2.0 |
| | | MIBK | 7.0 |
| | (D) | Titanium oxide | 1.5 |
| | | Carbon black | 0.2 |
| | | Precipitated barium sulfate | 3.0 |
| | | Mica | 8.0 |
| | | Talc | 28.0 |
| | (H) (BB) | Amide wax | 5.0 |
| | | Epoxy silane | 0.3 |
| | Subtotal (parts by mass) | | 89.0 |
| Curing agent | (B) | Polyamide amine | 5.0 |
| | (G) | Xylene | 3.0 |
| | | n-Butanol | 2.9 |
| | (AA) | TAP | 0.1 |
| | Subtotal (parts by mass) | | 11.0 |
| Total (parts by mass) | | | 100.0 |

### <Preparation of Pressure-sensitive Adhesive Layer (pa) 1 Sandwiched Between Release Layers (rl)>

A reaction vessel equipped with a cooling tube, a nitrogen introduction tube, a thermometer, a dripping device, a heating and cooling jacket, and a stirrer was charged with 30 parts by mass of methyl ethyl ketone. A mixture constituted of 90 parts by mass of 2-ethylhexyl acrylate ("AEH" manufactured by Nippon Shokubai Co., Ltd), 10 parts by mass of acrylic acid ("98% acrylic acid" manufactured by Toagosei Co., Ltd.), 1 part by mass of 2,2'-azobis(2,4-dimethylvaleronitrile) ("ABN-V" manufactured by Nippon Finechem Co., Ltd.), as a polymerization initiator, and 16 parts by mass of methyl ethyl ketone was added dropwise over 1 hour from the dripping device while maintaining a temperature condition of 80 ± 5°C under a nitrogen-gas stream. Thereafter, the mixture was stirred at the same temperature for 1 hour, and methyl ethyl ketone was removed by distillation under reduced pressure. Then, 90 parts by mass of 2-ethylhexyl acrylate ("AEH" manufactured by Nippon Shokubai Co., Ltd.) and 10 parts by mass of acrylic acid (manufactured by Toagosei Co., Ltd., and "98% acrylic acid") were added to obtain an acrylic monomer mixture. To 100 parts by mass of the acryl-based monomer mixture, 0.1 parts by mass of 2,2-dimethoxy-1,2-diphenylethan-1-one ("IRGACURE 651" manufactured by BASF Japan Ltd.) as a photopolymerization initiator and 0.5 parts by mass of 1,6-hexanediol diacrylate ("MIRAMER M200".manufactured by MIWON Corporation) as a crosslinking agent were added. The resulting mixture was applied to a release surface of a release film (silicone treated PET film, thickness: 50 µm, "SP-PET-O1-50-BU" manufactured by Mitsui Chemicals Tohcello, Inc.) by use of a film applicator. Onto the resulting release surface, the release surface of the same release film as described above was bonded. Further, ultraviolet ray was applied (ultraviolet illuminance: 50 mW/cm2, cumulative dose: 2000 mJ/cm2) by an ultraviolet lamp (mercury lamp) to obtain the acrylic pressure-sensitive adhesive layer 1 having an average thickness of 50 µm and sandwiched by the two release films.

### <Production Example of Laminated antifouling coating film>

### [Example 1]

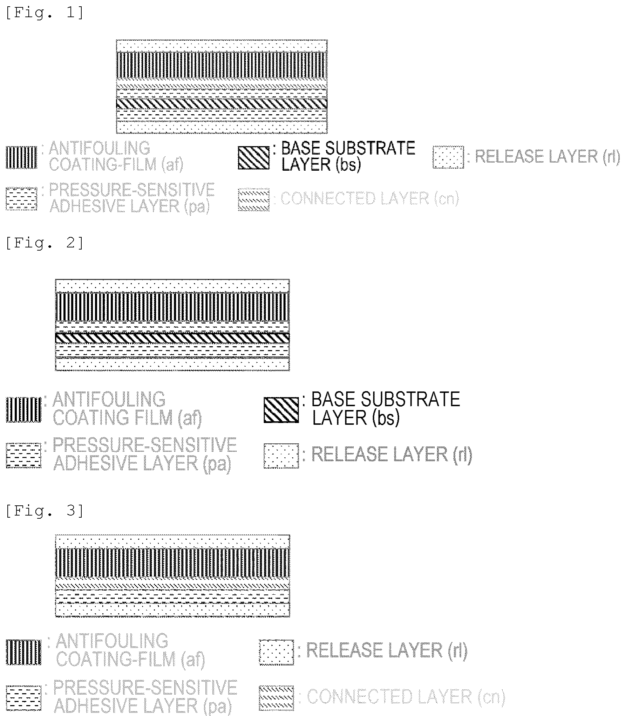

To an area of 30 cm × 10 cm of a release surface of a release film (silicone treated PET film of 50 µm in thickness, "SP-PET-O1-50-BU" manufactured by Mitsui Chemicals Tohcello, Inc., corresponding to the release layer (rl)), antifouling coating composition C1 was applied by use of a film applicator, and dried at normal temperature for 1 hour and at 50°C for 24 hours to form C1 coating film (corresponding to an antifouling coating film (af)) having a thickness of about 200 µm. Subsequently, a mixture of the main agent and the curing agent of the middle-layer coating composition C8 was applied onto the C1 coating film by use of a film applicator, and dried at normal temperature for 1 hour and at 50°C for 24 hours to form C8 coating film having a film thickness of about 100 µm. To the C8 coating film, a double-sided tape ("acrylic double-sided tape for airtightness and waterproofing" manufactured by Teraoka Seisakusho Co., Ltd., base material: polyethylene cloth, adhesive: acrylic base, tape thickness: 0.22 mm, with single-sided release paper, corresponding to a base substrate layer (b2), two pressure-sensitive adhesive layers (pa) and a release layer (rl)) was attached to prepare a laminated antifouling coating film. The laminated structure of the coating film sheet is shown in Fig. 1 and Table 5.

**[Table 5]**

| Layer No. | Constituent layer | Content |
|---|---|---|
| 1 | Release layer (rl) | Silicone-treated PET film |
| 2 | Antifouling coating film (af) | Coating film of antifouling coating composition C1 |
| 3 | Connected layer (cn) | Coating film of middle-layer coating composition C8 |
| 4 | Pressure-sensitive adhesive layer (pa) | Acrylic adhesive |
| 5 | Base substrate layer (bs) | Polyethylene cloth |
| 6 | Pressure-sensitive adhesive layer (pa) | Acrylic adhesive |
| 7 | Release layer (rl) | Release paper |

The release layer (rl) of the first layer and the release layer (rl) of the seventh layer of Example 1 were peeled off and wound around a titanium cylinder having a diameter of 75 mm clockwise such that the side having a width of 10 cm was in parallel to the axial direction of the cylinder. After one round of winding, the film was attached so as to overlap from the winding initiation position. That is, the sixth pressure-sensitive adhesive layer (pa) is placed on and in contact with the antifouling coating film (af). The laminated antifouling coating film-attached cylinder thus prepared was stirred clockwise in the sea at 100 rpm for 1 month. That is, the water flow was directed from the upstream side to the downstream side toward the end of the winding, and rotation was made in such a direction that the undulation of the end portion did not receive the water flow. The laminated antifouling coating film was not peeled off from the cylinder. It was observed that algae and the like were attached to a portion having no laminated antifouling coating film wound around, but fouling was not observed at a portion having the laminated antifouling coating film wound. In addition, this laminated antifouling coating film could be peeled off from the cylinder, and the original state was easily regained.

### [Example 2]

To an area of 15 cm × 8 cm of a release surface of a release film (silicone treated PET film of 50 µm in thickness:, "SP-PET-O1-50-BU" manufactured by Mitsui Chemicals Tohcello, Inc., corresponding to a release layer (rl)), antifouling coating composition C2 was applied by use of a film applicator, and dried at normal temperature for 1 hour and at 50°C for 7 days to form C2 coating film (corresponding to an antifouling coating film (af)) having a film thickness of about 1000 µm. Subsequently, to the surface of the C2 coating film, a double-sided tape ("Multi-use double-sided adhesive tape No. 5015" manufactured by Nitto Denko Corporation, base material: nonwoven fabric, adhesive: acrylic base, tape thickness 0.12 mm, with release paper on one side; corresponding to a base substrate layer (bs), two adhesive layers (pa) and a release layer (rl)) was attached to prepare a laminated antifouling coating film. The laminated structure of this coating film sheet is shown in Fig. 2 and Table 6.

**[Table 6]**

| Layer No. | Constituent layer | Content |
|---|---|---|
| 1 | Release layer (rl) | Silicone-treated PET film |
| 2 | Antifouling coating film (af) | Coating film of antifouling coating composition C2 |
| 3 | Pressure-sensitive adhesive layer (pa) | Acrylic adhesive |
| 4 | Base substrate layer (bs) | Non-woven cloth |
| 5 | Pressure-sensitive adhesive layer (pa) | Acrylic adhesive |
| 6 | Release layer (rl) | Release paper |

An epoxy-based rust preventive coating material (epoxy AC paint, trade name "BANNOH 500", manufactured by CHUGOKU MARINE PAINTS LTD.) was applied to a sandblasted steel plate (length 200 mm × width 100 mm × thickness 2.3 mm) such that the dry film thickness became about 100 µm, and dried at normal temperature for 7 days. Subsequently, against the coating film, the pressure-sensitive adhesive layer (pa) of the fifth layer of the laminated antifouling coating film of Example 2 was pressed after the release layer (rl) of the sixth layer was peeled off, attached by applying pressure from the release-layer (rl) side of the first layer by a rubber roller. Further, the edge portion of the laminated antifouling coating film and the periphery to which the laminated antifouling coating film was attached were coated and covered with antifouling coating composition C2 such that the edge and the periphery are continued, and then the release layer (rl) of the sixth layer of the laminated antifouling coating film was peeled off.

The test plate provided with the laminated antifouling coating film thus prepared was set up on the side surface of a spinning rotor, immersed in the sea of Kure, Hiroshima prefecture, and rotated at a speed of about 15 knots when measured at the surface of the coating film. Twelve months later, when the surface of the antifouling coating film was visually observed, it was confirmed that there are no deposits on the surface and the antifouling property is satisfactory.

### [Example 3]

To an area of 8 cm × 8 cm of the release surface of the release film (silicone-treated PET film of 50 µm in thickness, "SP-PET-O1-50-BU" manufactured by Mitsui Chemicals Tohcello, Inc., corresponding to a release layer (rl)), antifouling coating composition C3 was applied by use of a film applicator, and dried at normal temperature for 1 hour and at 50°C for 24 hours to form C3 coating film (corresponding to the antifouling coating film (af)) having a film thickness of about 100 µm. Subsequently, a mixture of the main agent and the curing agent of middle-layer coating composition C8 was applied onto the C3 coating film by use of a film applicator, and dried at normal temperature for 1 hour and at 50°C for 24 hours to form C8 coating film having a film thickness of about 100 µm. In this Example, C8 coating film serves as not only a connected layer (cn) but also a base substrate layer (bs). To the C8 coating film, pressure-sensitive adhesive layer (pa) 1 sandwiched by the release layers (rl) was applied after one of the release layers (rl) (release film) was peeled off to prepare a laminated antifouling coating film. The laminated structure of the coating film sheet is shown in Fig. 3 and Table 7. An additional equivalent laminated antifouling coating film was prepared in the same manner.

**[Table 7]**

| Layer No. | Constituent layer | Content |
|---|---|---|
| 1 | Release layer (rl) | Silicone-treated PET film |
| 2 | Antifouling coating film (af) | Coating film of antifouling coating composition C1 |
| 3 | Connected layer (cn) also serving as base substrate layer (bs) | Coating film of middle-layer coating composition C8 |
| 4 | Pressure-sensitive adhesive layer (pa) | Acrylic adhesive |
| 5 | Release layer (rl) | Release paper |

Against a vinyl chloride plate (length 200 mm × width 100 mm × thickness 4 mm), the pressure-sensitive adhesive layer (pa) of the sixth layer of the laminated antifouling coating film of Example 3 was pressed after the release layer (rl) of the seventh layer was peeled off, and attached by applying pressure by a rubber roller from the release layer (rl) side of the first layer to peel off the release layer (rl) of the first layer. Subsequently, the laminated antifouling coating films of Example 3 were similarly attached such that the edge portions thereof are overlapped with each other at the adjacent positions (refer to Fig. 4, the connected layer is not shown). Further, the edge portion of the laminated antifouling coating film and the periphery having the laminated antifouling coating film attached thereof except the adjacent or overlapping portions were coated with antifouling coating composition C3 such that the edge and the periphery are continued.

The test plate provided with the laminated antifouling coating film thus prepared was placed on the side surface of the spinning rotor such that the overlapping part of the two laminated antifouling coating films is matched with the direction of the water flow as shown in Fig. 4, actually immersed in the sea of Kure, Hiroshima prefecture, and rotated at a speed of about 15 knots when measured at the surface of the coating film. Twelve months later, when the surface of the antifouling coating film was visually observed, it was confirmed that there are no deposits on the surface and the antifouling property is satisfactory. In addition, peeling of the coating film was not observed. The Example discloses a method for attaching laminated antifouling coating films (sheets) of the present invention placed side by side while preventing peel-off and reducing the number of steps of sealing the edge portions.

### [Example 4]

A member having a stainless steel (SUS430) foil (corresponding to a base substrate layer (bs)) of 15 cm × 8 cm and a thickness of 0.1 mm, an acrylic pressure-sensitive adhesive layer (pa) in contact with one of the surfaces of the stainless steel foil, and a release paper (release layer (rl)) in contact with the other surface (a surface opposite to the stainless steel foil) was prepared. To the surface of the stainless foil of the laminated antifouling coating film not in contact with the acryl-based pressure-sensitive adhesive layer (pa), middle-layer coating composition C8 prepared by mixing a main agent and a curing agent was applied by spraying, and dried at normal temperature for 1 hour and at 50°C for 24 hours to form C8 coating film having a film thickness of about 100 µm. Subsequently, to C8 coating film, antifouling coating composition C4 was applied by spraying, and dried at normal temperature for 1 hour and at 50°C for 24 hours to form C4 coating film having a film thickness of about 100 µm to prepare a laminated antifouling coating film. The laminated structure of the coating film sheet is shown in Fig. 3 and Table 7.

**[Table 8]**

| Layer No. | Constituent layer | Content |
|---|---|---|
| 1 | Antifouling coating film (af) | Coating film of antifouling coating composition C4 |
| 2 | Connected layer (cn) | Coating film of middle-layer coating composition C8 |
| 3 | Base substrate layer (bs) | Stainless steel foil (SUS430) |
| 4 | Pressure-sensitive adhesive layer (pa) | Acrylic adhesive |
| 5 | Release layer (rl) | Release paper |

An epoxy-based rust preventive coating material (epoxy AC paint, trade name "BANNOH 500", manufactured by CHUGOKU MARINE PAINTS LTD.) was applied to a sandblasted steel plate (length 200 mm × width 100 mm × thickness 2.3 mm) such that the dry film thickness became about 100 µm, and dried at normal temperature for 7 days. Subsequently, against the coating film, the pressure-sensitive adhesive layer (pa) of the fourth layer of the laminated antifouling coating film of Example 4 was pressed after the release layer (rl) of the fifth layer was peeled off, and attached by applying pressure by a rubber roller from the release layer (rl) side of the first layer. Further, the edge portion of the laminated antifouling coating film and the periphery having the laminated antifouling coating film attached thereof were coated with antifouling coating composition C4 such that the edge and the periphery are continued.

The test plate provided with the laminated antifouling coating film thus prepared was set up on the side surface of a spinning rotor, immersed in the sea of Kure, Hiroshima prefecture, and rotated at a speed of about 15 knots when measured at the surface of the coating film. Twelve months later, when the surface of the antifouling coating film was visually observed, it was confirmed that there are no deposits on the surface and the antifouling property is satisfactory. In addition, peeling of the coating film was not observed.

### [Example 5]

To an area of 8 cm × 8 cm of a release surface of a release film (silicone treated PET film of 50 µm in thickness, "SP-PET-O1-50-BU" manufactured by Mitsui Chemicals Tohcello, Inc., corresponding to a release layer (rl)), antifouling coating composition C1 was applied by use of a film applicator, and dried at normal temperature for 1 hour and at 50°C for 24 hours to form C1 coating film (corresponding to an antifouling coating film (af)) having a thickness of about 100 µm. Subsequently, antifouling coating composition C5 was applied to an area of 10 cm × 10 m so that the coating film was present in the center, and dried at normal temperature for 1 hour and at 50°C for 24 hours to form C5 coating film having a film thickness of about 100 µm. Note that, in the Example, C5 coating film serves as not only an antifouling coating film (af) but also a connected layer (cn). To the C5 coating film, a double-sided tape ("acrylic double-sided tape for airtightness/waterproofing" manufactured by Teraoka Seisakusho Co., Ltd., base material: polyethylene cloth, adhesive: acrylic base, tape thickness 0.22 mm, corresponding to base substrate layer (bs) provided with single-sided release paper, two adhesive layers (pa) and release layer (rl)) was attached to prepare a laminated antifouling coating film. The laminated structure of this coating film sheet is shown in Fig. 6 and Table 9.

**[Table 9]**

| Layer No. | Constituent layer | Content |
|---|---|---|
| 1 | Release layer (rl) | Silicone-treated PET film |
| 2 | Antifouling coating film (af) | Coating film of antifouling coating composition C1 |
| 3 | Antifouling coating film (af) also serving as connected layer (cn) | Coating film of antifouling coating composition C5 |
| 4 | Pressure-sensitive adhesive layer (pa) | Acrylic adhesive |
| 5 | Base substrate layer (bs) | Polyethylene cloth |
| 6 | Pressure-sensitive adhesive layer (pa) | Acrylic adhesive |
| 7 | Release layer (rl) | Release paper |

Against a vinyl chloride plate (length 200 mm × width 100 mm × thickness 4 mm), the pressure-sensitive adhesive layer (pa) of the sixth layer of the laminated antifouling coating film of Example 5 was pressed after the release layer (rl) of the seventh layer was peeled off and attached by applying pressure by a rubber roller from the release layer (rl) side of the first layer, and then the release layer (rl) of the first layer was peeled off. Further, the site where C5 coating film of the laminated antifouling coating film was exposed and the periphery where the laminated antifouling coating film was attached were coated with antifouling coating composition C1 such that the site and the periphery are continued

The test plate provided with the laminated antifouling coating film thus prepared was immersed in the sea of Kure, Hiroshima prefecture, and rotated at a speed of about 15 knots when measured at the surface of the coating film. Twelve months later, when the surface of the antifouling coating film was visually observed, it was confirmed that there are no deposits on the surface and the antifouling property is satisfactory. In addition, peeling of the coating film was not observed. In order to prevent overlooking of sealing at the edge portion, the Example discloses a laminated antifouling coating film in which coating films having different hues are exposed at the edge portion (coating materials C1 and C5 have different hues from each other).

### [Example 6]

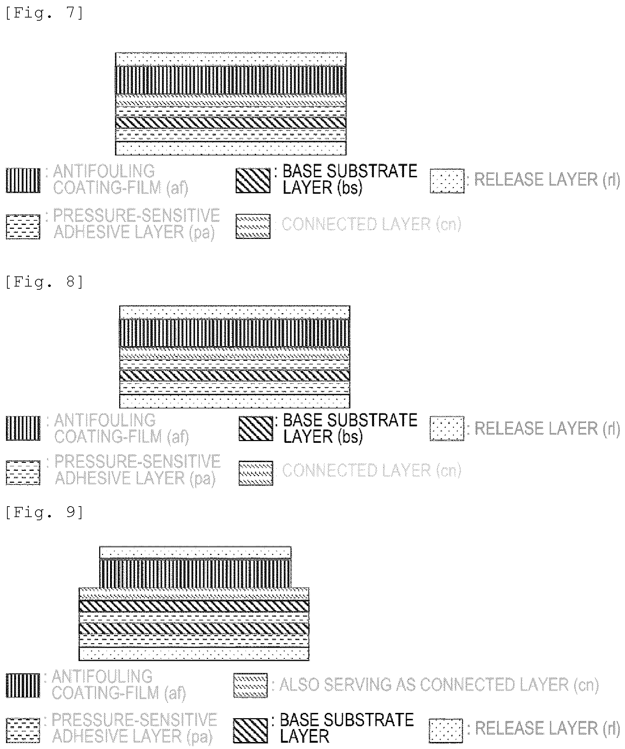

Using a UV curable coating material, a PET film having a V-shaped groove surface structure (riblet structure) having an apex angle of 90 degrees and a pitch of 0.05 mm was prepared. To the surface having the surface structure of the PET film, antifouling coating composition C6 was applied by use of a film applicator, and dried at normal temperature for 1 hour and at 50°C for 24 hours to form C6 coating film having a film thickness of about 200 µm. Subsequently, onto the C6 coating film, a mixture of the main agent and the curing agent of middle-layer coating composition C8 was applied by use of a film applicator, and dried at normal temperature for 1 hour and at 50°C for 24 hours to form C8 coating film having a film thickness of about 100 µm. To the C8 coating film, a double-sided tape ("acrylic double-sided tape for airtightness/waterproofing" manufactured by Teraoka Seisakusho Co., Ltd., base material: polyethylene cloth, adhesive: acrylic base, tape thickness 0.22 mm, with single-sided release paper, corresponding to base substrate layer (bs), two adhesive layers (pa) and release layer (rl)) was attached to prepare a laminated antifouling coating film. The laminated structure of this coating film sheet is shown in Fig. 7 and Table 10.

**[Table 10]**

| Layer No. | Constituent layer | Content |
|---|---|---|
| 1 | Release layer (rl) | PET film having a surface structure |
| 2 | Antifouling coating film (af) | Coating film of antifouling coating composition C6 |
| 3 | Connected layer (cn) | Coating film of middle-layer coating composition C8 |
| 4 | Pressure-sensitive adhesive layer (pa) | Acrylic adhesive |
| 5 | Base substrate layer (bs) | Polyethylene cloth |
| 6 | Pressure-sensitive adhesive layer (pa) | Acrylic adhesive |
| 7 | Release layer (rl) | Release paper |

Against a vinyl chloride plate (length 200 mm× width 100 mm× thickness 4 mm), the pressure-sensitive adhesive layer (pa) of the sixth layer of the laminated antifouling coating film of Example 6 was pressed after the release layer (rl) of the seventh layer was peeled off and attached by applying pressure by a rubber roller from the release layer (rl) side of the first layer, and then the release layer (rl) of the first layer was peeled off. Further, the site where C8 coating film of the laminated antifouling coating film was exposed and the periphery where the laminated antifouling coating film was attached were coated with antifouling coating composition C1 such that the site and the periphery are continued.

The test plate provided with the laminated antifouling coating film thus prepared was immersed in the sea of Kure, Hiroshima prefecture, and rotated at a speed of about 15 knots when measured at the surface of the coating film. Twelve months later, when the surface of the antifouling coating film was visually observed, it was confirmed that there are no deposits on the surface and the antifouling property is satisfactory.

### [Example 7]

To an area of 30 cm × 10 cm of a release surface of a release film (silicone treated PET film of 50 µm in thickness, "SP-PET-O1-50-BU" manufactured by Mitsui Chemicals Tohcello, Inc., corresponding to a release layer (rl)), antifouling coating composition C7 was applied by use of a film applicator, and dried at normal temperature for 1 hour and at 50°C for 24 hours to form C1 coating film having a film thickness of about 200 µm. Subsequently, a mixture of the main agent and the curing agent of middle-layer coating composition C8 was applied to the C7 coating film by use of a film applicator, and dried at normal temperature for 1 hour and at 50°C for 24 hours to form C8 coating film having a thickness of about 100 µm. To the C8 coating film, a double-sided tape ("acrylic double-sided tape for airtightness and waterproofing" manufactured by Teraoka Seisakusho Co., Ltd., base material: polyethylene cloth, adhesive: acrylic base, tape thickness: 0.22 mm, with single-sided release paper. corresponding to a base substrate layer (bs), two adhesive layers (pa) and a release layer (rl)) was attached to prepare a laminated antifouling coating film. The laminated structure of this coating film sheet is shown in Fig. 8 and Table 11.

**[Table 11]**

| Layer No. | Constituent layer | Content |
|---|---|---|
| 1 | Release layer (rl) | Silicone-treated PET film |
| 2 | Antifouling coating film (af) | Coating film of antifouling coating composition C7 |
| 3 | Connected layer (cn) | Coating film of middle-layer coating composition C8 |
| 4 | Pressure-sensitive adhesive layer (pa) | Acrylic adhesive |
| 5 | Base substrate layer (bs) | Polyethylene cloth |
| 6 | Pressure-sensitive adhesive layer (pa) | Acrylic adhesive |
| 7 | Release layer (rl) | Release paper |

When the laminated antifouling coating film thus prepared is cut into the forms of numbers or letters and attached to the hull, a display such as a draft mark can be easily displayed.

### [Example 8]

One of the surfaces of a hard vinyl chloride sheet (corresponding to base substrate layer (bs)) having a size of 15 cm × 8 cm and a thickness of 0.3 mm was polished by a #240 sandpaper, and washed with xylene. Thereafter, middle-layer coating composition C8 having a main agent and a curing agent mixed therein was applied by spraying, and dried at normal temperature for 1 hour and at 50°C for 24 hours to form C8 coating film having a film thickness of about 100 µm as a connected layer (cn). Subsequently, a region having a width of 1 cm at the edge of the formed connected layer (cn) was protected with a masking tape. Antifouling coating composition C1 was applied to a non-protected range by spraying, and dried at normal temperature for 1 hour and at 50°C for 24 hours to form C1 coating film having a film thickness of about 200 µm. In this manner, an antifouling coating film (af) was obtained. Thereafter, a release paper was attached as a release layer (rl) such that the release surface faced the antifouling coating film (af) with a masking tape and so as to coat antifouling coating film (af). Subsequently, to a surface of the base substrate layer (bs)-1 not in contact with the connected layer (cn), a surface of a double-sided tape ("Cut Ace" manufactured by Sumika Plastics, Inc., base material: polyethylene film, adhesive: acrylic base, tape thickness 0.1 mm, with release paper on one side, corresponding to a base substrate layer (bs), two adhesive layers (ad) and a release layer (rl)) not provided with a release paper was bonded to prepare a laminated antifouling coating film. The laminated structure of this coating film sheet is shown in Fig. 9 and Table 12.

**[Table 12]**

| Layer No. | Constituent layer | Content |
|---|---|---|
| 1 | Release layer (rl) | Release paper |
| 2 | Antifouling coating film (af) | Coating film of antifouling coating composition C1 |
| 3 | Connected layer (cn) | Coating film of middle-layer coating composition C8 |
| 4 | Base substrate layer (bs) | Hard vinyl chloride sheet |
| 5 | Pressure-sensitive adhesive layer (pa) | Acrylic adhesive |
| 6 | Base substrate layer (bs) | Polyethylene film |
| 7 | Pressure-sensitive adhesive layer (pa) | Acrylic adhesive |
| 8 | Release layer (rl) | Release paper |

An epoxy-based rust preventive coating material (epoxy AC paint, trade name "BANNOH 500", manufactured by CHUGOKU MARINE PAINTS LTD.) was applied to a sandblasted steel plate (length 300 mm × width 100 mm × thickness 2.3 mm) so that the dry film thickness was about 100 µm, and dried at normal temperature for 7 days. Subsequently, the release layer (rl) of the eighth layer of the laminated antifouling coating film of Example 8 was peeled off, and the seventh layer of pressure-sensitive adhesive layer (pa) was pressed and attached by applying pressure by use of a rubber roller from the release layer (rl) side of the first layer. Further, middle-layer coating composition C8 having a main agent and a curing agent mixed therein was spray-coated such that a dried film thickness became 200 µm and such that the surface of the laminated antifouling coating film at which the connected layer (cn) was exposed and the periphery of a site to which the laminated antifouling coating film is attached are continued, and dried at normal temperature for 1 day. Subsequently, after coating with antifouling coating composition C1, the release layer (rl) of the first layer was removed to prepare a test plate provided with a laminated antifouling coating film.

The test plate with a laminated antifouling coating film thus prepared was placed on the inner surface of a cylinder filled with seawater of 30°C, and the seawater was stirred while replacing with a constant amount of seawater to apply a water flow to the surface of the coating film. Twelve months later, when the surface of the antifouling coating film was visually observed, it was confirmed that there are no deposits on the surface and the antifouling property is satisfactory. In addition, peeling of the coating film was not observed even under an environment having a higher peeling load than in sea water at normal temperature.

## Claims

1. A laminated antifouling coating film having
an antifouling coating film (af) and a pressure-sensitive adhesive layer (pa), wherein
the antifouling coating film (af) contains a hydrolyzable copolymer (A) having a constitutional unit derived from a hydrolyzable group-containing monomer (a1).

2. The laminated antifouling coating film according to claim 1, wherein the antifouling coating film (af) contains 10 to 99 mass% of the hydrolyzable copolymer (A).

3. The laminated antifouling coating film according to claim 1, wherein the hydrolyzable copolymer (A) has a constitutional unit derived from a metal ester group-containing monomer.

4. The laminated antifouling coating film according to claim 1, wherein the hydrolyzable copolymer (A) has a constitutional unit derived from a metal ester group-containing monomer (all), and the metal ester group-containing monomer (a11) is represented by the following formula (11): 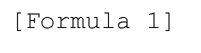 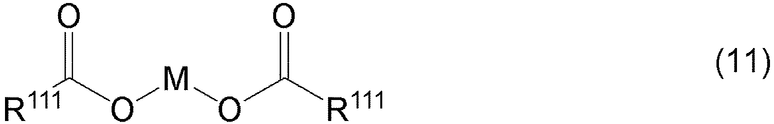 in the formula (1), R¹¹¹s each independently represent a monovalent group containing a terminal ethylenically unsaturated group, and M represents a metal atom.

5. The laminated antifouling coating film according to claim 4, wherein M represents a zinc atom.

6. The laminated antifouling coating film according to claim 1, wherein the hydrolyzable copolymer (A) has a constitutional unit derived from a polyorganosiloxane block-containing monomer (a2) represented by the following formula (2): 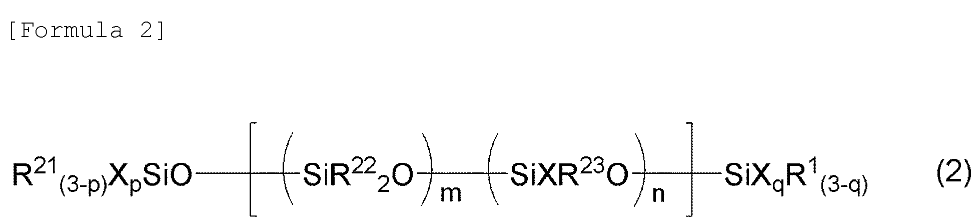 in the formula (2), R²¹, R²², and R²³ each independently represent a monovalent hydrocarbon group; Xs each independently represent a (meth)acryloyloxyalkyl group or a mercaptoalkyl group, m is 1 or more, n is 0 or more, p and q are each independently 0 or 1, and n + p + q is 1 or more.

7. The laminated antifouling coating film according to claim 1, further comprising a middle layer (md), wherein the middle layer (md) is present between the antifouling coating film (af) and the pressure-sensitive adhesive layer (pa).

8. The laminated antifouling coating film according to claim 7, wherein the middle layer (md) contains a polymer (B) except the hydrolyzable polymer (A).

9. The laminated antifouling coating film according to claim 8, wherein the polymer (B) contains an epoxy resin.

10. The laminated antifouling coating film according to claim 7, wherein the middle layer (md) includes a base substrate layer (bs) made of a metal.

11. The laminated antifouling coating film according to claim 1, wherein the antifouling layer (af) has a concave-convex structure on a surface thereof.

12. A water-contact structure provided with a laminated antifouling coating film, having a water-contact structure and the laminated antifouling coating film according to claim 1.

13. A method for producing a laminated antifouling coating film, comprising
a step of laminating an antifouling coating film (af) and a pressure-sensitive adhesive layer (pa),
wherein the antifouling coating film (af) contains a hydrolyzable copolymer (A) having a constitutional unit derived from a hydrolyzable group-containing monomer (a1).

14. A method for producing a water-contact structure provided with a laminated antifouling coating film, comprising a step of attaching the laminated antifouling coating film according to claim 1 to a water-contact structure.

15. The method according to claim 14, further comprising a step of attaching another laminated antifouling coating film (hereinafter, referred to as a "second laminated antifouling coating film") to a boundary between a region (X) where the laminated antifouling coating film (hereinafter, referred to as a "first laminated antifouling coating film") formed by the attaching step is attached and a region (Y) where the first laminated antifouling coating film is not attached, such that at least a part of each of the regions (X) and (Y) is covered with the second laminated antifouling coating film.
